# EUROPEAN PATENT APPLICATION

(11) **EP 4 622 341 A1**
(43) Date of publication of application: **24.09.2025**
(21) Application number: 22966226.7
(22) Date of filing: 25.11.2022
(51) Int. Cl.: H04W 36/00

(54) **COMMUNICATION METHOD, APPARATUS AND SYSTEM, AND STORAGE MEDIUM AND PROGRAM PRODUCT**

(71) Applicant: Huawei Technologies Co., Ltd., Shenzhen, Guangdong 518129 (CN)
(72) Inventor: XING, Weijun, Shenzhen, Guangdong 518129 (CN); WU, Shaoyun, Shenzhen, Guangdong 518129 (CN)
(74) Representative: Epping - Hermann - Fischer
(86) International application number: PCT/CN2022/134275
(87) International publication number: WO 2024/108535

(57) **Abstract**

This application discloses a communication method, apparatus, and system, a storage medium, and a program product. A first network element obtains service input data or an obtaining credential of the service input data from a second network element based on a received service trigger event, and sends a service request to at least one third network element. The at least one third network element executes a requested service based on the service request, and sends a service feedback to the first network element. In this application, a new core network architecture implemented by using a serverless architecture is provided, so that the first network element uniformly processes the service request, and invokes the at least one third network element in a network, and third network elements have no coupling relationship or a weak coupling relationship, thereby improving flexibility of network deployment and management.

## Description

### TECHNICAL FIELD

This application relates to the field of communication technologies, and in particular, to a communication method, apparatus, and system, a storage medium, and a program product.

### BACKGROUND

In an existing network architecture, the entire network architecture is designed based on a network element (or referred to as a network function), and each network element has a specific function. One network element communicates with one or more specific network elements. A coupling relationship between network elements is strong, and network functions are extremely "heavy". In addition, logic of the network architecture is complex, and disaster recovery is difficult. Each network element needs to independently maintain a context related to a user. Once the network element is faulty, the context is lost. Therefore, based on the design of the existing network architecture, network deployment and management cannot be flexibly performed.

### SUMMARY

This application provides a communication method, apparatus, and system, a storage medium, and a program product, to improve flexibility of network deployment and management.

According to a first aspect, a communication method is provided. The method includes: A first network element obtains service input data or an obtaining credential of the service input data from a second network element based on a received service trigger event. The first network element sends a service request to at least one third network element, where the service request includes the service input data or the obtaining credential of the service input data. In addition, the first network element receives a service feedback from the at least one third network element, where the service feedback includes a service execution result.

In this aspect, a new core network architecture implemented by using a serverless architecture is provided, so that the first network element can process different service requests, and invoke the at least one third network element in a network, and third network elements have no coupling relationship or a weak coupling relationship, thereby improving flexibility of network deployment and management.

In a possible implementation, the first network element is configured to process different service requests in a network, the second network element is configured to provide a data storage service for the first network element and/or the at least one third network element, and the at least one third network element is a network element providing a network function, where the at least one third network element includes a session management function network element, an access and mobility management function network element, and a policy control function network element.

In another possible implementation, that the first network element sends a service request to at least one third network element includes: The first network element sends the service request to the at least one third network element based on execution logic of a service, where the execution logic of the service includes at least one of the following information: at least one third network element that needs to be invoked for each service, a scheduling sequence of the at least one third network element, a format of service input data corresponding to each third network element, and content of the service input data corresponding to each third network element. In this implementation, the execution logic of the service may correspond to a service provided by a network for a terminal. Specifically, a network function that needs to be invoked for each service, an invoking sequence, a format and content of input data that need to be provided by each network function, and the like may be referred to as execution logic of the service. The execution logic of the service may be implemented in a form of a script, a segment of code, or the like, and may be preconfigured or configured by a network function for the first network element.

In still another possible implementation, the method further includes: The first network element sends a scheduling request to a fourth network element, where the fourth network element is configured to provide a network function discovery and selection service for the first network element. In addition, the first network element receives a scheduling response from the fourth network element, where the scheduling response includes at least one of the following information of the at least one third network element: a capability, an identifier, address information, status information, and home network information of the at least one third network element. In this implementation, the fourth network element provides the network function discovery and selection service for the first network element. In still another possible implementation, the service feedback further includes an update result of the service input data, and the method further includes: The first network element sends a data synchronization request to the second network element, where the data synchronization request includes the update result of the service input data. In addition, the first network element receives a data synchronization response from the second network element. In this implementation, after completing a service, the third network element may further update data in the second network element, for example, update a context of a terminal. Therefore, the service feedback may further include the update result of the service input data.

In still another possible implementation, the service trigger event includes a service request from a fifth network element, and the method further includes: The first network element sends the service feedback to the fifth network element. In this implementation, the first network element may further process the service request from the fifth network element, to implement service invoking between sub-networks.

In still another possible implementation, the first network element and the fifth network element belong to different networks, and the different networks are user-level networks or operator networks, different user-level networks, or different network slices.

In still another possible implementation, the service input data is processed user data. In this implementation, security in a service input data transmission process may be improved.

In still another possible implementation, the service input data is unprocessed user data, and the method further includes:
The first network element processes the service input data to obtain processed user data.

In still another possible implementation, the processed user data includes at least one of the following: encrypted user data, user data from which user identification information is removed, a temporary user identifier, and an encrypted user identifier.

In still another possible implementation, the service trigger event includes at least one of the following: a communication service request initiated by a terminal, a communication service request initiated by the fifth network element, a periodic communication service, and an event-triggered communication service. That the first network element sends a service request to at least one third network element includes: The first network element separately sends the service request to at least one third network element associated with the service trigger event, where the service request includes the service input data obtained by the first network element from the second network element and a service execution result obtained from another third network element in the at least one third network element. In addition, that the first network element receives a service feedback from the at least one third network element includes: The first network element separately receives the service feedback from the at least one third network element.

In still another possible implementation, the service trigger event is a session establishment request, and the service input data includes session subscription data. That the first network element sends a service request to at least one third network element includes: The first network element sends a session policy request to the PCF, where the session policy request includes at least one of the following information: a data network name DNN and network slice information. That the first network element receives a service feedback from the at least one third network element includes: The first network receives a session policy response from the PCF, where the session policy response includes a session policy, and the session policy is generated based on the DNN and/or the network slice information. In still another possible implementation, that the first network element sends a service request to at least one third network element further includes: The first network element sends a session establishment request to the SMF, where the session establishment request includes session policy information or session subscription information. That the first network element receives a service feedback from the at least one third network element further includes: The first network element receives a session establishment response from the SMF, where the session establishment response includes a session context. In an existing session establishment scenario, after receiving a session establishment request of a terminal, a RAN forwards the session establishment request to an SMF. After receiving the session establishment request of the terminal, the SMF obtains session-related subscription data of the terminal from a UDM/UDR. In other words, the SMF may directly access the subscription data of the terminal, and then the SMF interacts with another network element based on the subscription data of the terminal to establish a subsequent session. In this case, privacy data of a user is frequently transmitted in a network, and security is reduced. In this implementation, the first network element uniformly obtains session-related subscription data from the second network element and sends the session-related subscription data to the SMF, but the SMF cannot directly access the session-related subscription data of the terminal. This avoids frequent transmission of privacy data of a user in the network, and improves security of the data.

In still another possible implementation, that the first network element sends a service request to at least one third network element further includes: The first network element performs user plane configuration on a user plane function network element.

According to a second aspect, a communication method is provided. The method includes: A second network element receives an obtaining request from a first network element, where the obtaining request is used to request to obtain service input data or an obtaining credential of the service input data, and the obtaining credential of the service input data is a credential for obtaining the service input data. In addition, the second network element sends an obtaining response to the first network element, where the obtaining response includes the service input data or the obtaining credential of the service input data. In this aspect, the first network element uniformly obtains the service input data or the obtaining credential of the service input data from the second network element, and the third network element cannot directly access the service input data. This avoids frequent transmission of privacy data of a user in a network, and improves security of the data.

In a possible implementation, the first network element is configured to process different service requests in a network, the second network element is configured to provide a data storage service for the first network element and/or at least one third network element, and the at least one third network element is a network element providing a network function, where the at least one third network element includes a session management function network element, an access and mobility management function network element, and a policy control function network element.

In an existing communication system, each third network element needs to independently maintain a user plane context. Once any third network element is faulty, the user plane context maintained by the third network element may be lost. In the foregoing implementation, an independent second network element provides the data storage service for the first network element and/or the third network element, and the first network element and each third network element do not need to independently maintain related service data, thereby improving storage efficiency and security of the data.

In another possible implementation, the service input data is processed user data; and the method further includes: The second network element processes the service input data to obtain processed user data.

In still another possible implementation, the processed user data includes at least one of the following: encrypted user data, user data from which user identification information is removed, a temporary user identifier, and an encrypted user identifier.

According to a third aspect, a communication method is provided. The method includes: A third network element receives a service request, where the service request includes service input data or an obtaining credential of the service input data. In addition, the third network element executes a requested service based on the service request. In this aspect, a new core network architecture implemented by using a serverless architecture is provided, so that a first network element uniformly processes the service request, and invokes at least one third network element in a network, and third network elements have no coupling relationship or a weak coupling relationship, thereby improving flexibility of network deployment and management. In addition, the first network element uniformly obtains the service input data and sends the service input data to a related third network element; or the first network element obtains the obtaining credential of the service input data and sends the obtaining credential to a related third network element, and the related third network element obtains the service input data. The third network element cannot directly access the service input data. This avoids frequent transmission of privacy data of a user in the network, and improves security of the data.

In a possible implementation, the method further includes: The third network element sends a service feedback to the first network element, where the service feedback includes a service execution result.

In another possible implementation, the first network element is configured to process different service requests in a network, and the third network element is a network element providing a network function, where the third network element includes any one of the following: a session management function network element, an access and mobility management function network element, and a policy control function network element.

In still another possible implementation, that a third network element receives a service request includes: The third network element receives the service request from the first network element.

In still another possible implementation, the method further includes: The third network element sends a registration request to a fourth network element, where the registration request includes at least one of the following information: a capability, an identifier, address information, status information, and home network information of the third network element, and the fourth network element is configured to provide a network function discovery and selection service for the first network element. The third network element receives a registration response from the fourth network element.

In still another possible implementation, that a third network element receives a service request includes: The third network element receives the service request from the fourth network element.

In still another possible implementation, the service request includes the obtaining credential of the service input data, and that a third network element receives a service request includes: The third network element sends an obtaining request to a second network element based on the obtaining credential, where the second network element is configured to provide a data storage service for the first network element and/or the third network element. The third network element receives an obtaining response from the second network element, where the obtaining response includes the service input data.

In still another possible implementation, the service input data is processed user data.

In still another possible implementation, the processed user data includes at least one of the following: encrypted user data, user data from which user identification information is removed, a temporary user identifier, and an encrypted user identifier.

In still another possible implementation, the service request includes the service input data obtained by the first network element from the second network element and a service execution result obtained from another third network element in the at least one third network element.

In still another possible implementation, the third network element is the PCF network element, and the service input data includes session subscription data. That a third network element receives a service request includes: The third network element receives a session policy request, where the session policy request includes at least one of the following information: a data network name DNN and network slice information. That the third network element sends a service feedback to the first network element includes: The third network element sends a session policy response to the first network element, where the session policy response includes a session policy, and the session policy is generated based on the DNN and/or the network slice information.

In still another possible implementation, the third network element is the SMF network element. That a third network element receives a service request includes: The third network element receives a session establishment request, where the session establishment request includes session policy information or session subscription information. That the third network element sends a service feedback to the first network element includes: The third network element sends a session establishment response to the first network element, where the session establishment response includes a session context.

According to a fourth aspect, a communication method is provided. The method includes: A fourth network element receives a registration request from at least one third network element, where the registration request includes at least one of the following information: a capability, an identifier, address information, status information, and home network information of the third network element. The fourth network element sends a registration response to the at least one third network element. The fourth network element receives a scheduling request from a first network element. The fourth network element determines at least one scheduled third network element based on the scheduling request. In addition, the fourth network element sends a scheduling response to the first network element, where the scheduling response includes at least one of the following information of the at least one scheduled third network element: a capability, an identifier, address information, and status information of the at least one third network element; or the fourth network element sends the scheduling request to the at least one scheduled third network element. In this aspect, the fourth network element provides a network function discovery and selection service for the first network element. A third network element providing a single network service may register a capability, an identifier, address information, status information, home network information, and the like of the third network element with the fourth network element.

In a possible implementation, the first network element is configured to process different service requests in a network, the at least one third network element is a network element providing a network function, and the fourth network element is configured to provide a network function discovery and selection service for the first network element, where the at least one third network element includes a session management function network element, an access and mobility management function network element, and a policy control function network element.

According to a fifth aspect, a communication apparatus is provided, to implement the communication method according to the first aspect. For example, the communication apparatus may be a chip or a first network element. The method may be implemented by software, hardware, or hardware executing corresponding software.

In a possible implementation, the communication apparatus includes a transceiver unit and a processing unit. The processing unit is configured to obtain service input data or an obtaining credential of the service input data from a second network element based on a received service trigger event. The transceiver unit is configured to send a service request to at least one third network element, where the service request includes the service input data or the obtaining credential of the service input data. In addition, the transceiver unit is further configured to receive a service feedback from the at least one third network element, where the service feedback includes a service execution result.

Optionally, the communication apparatus is configured to process a service request in a network, the second network element is configured to provide a data storage service for the first network element and/or the at least one third network element, and the at least one third network element is a network element providing a network function, where the at least one third network element includes a session management function network element, an access and mobility management function network element, and a policy control function network element.

Optionally, the transceiver unit is further configured to send the service request to the at least one third network element based on execution logic of a service, where the execution logic of the service includes at least one of the following information: at least one third network element that needs to be invoked for each service, a scheduling sequence of the at least one third network element, a format of service input data corresponding to each third network element, and content of the service input data corresponding to each third network element.

Optionally, the transceiver unit is further configured to send a scheduling request to a fourth network element, where the fourth network element is configured to provide a network function discovery and selection service for the first network element. The transceiver unit is further configured to receive a scheduling response from the fourth network element, where the scheduling response includes at least one of the following information of the at least one third network element: a capability, an identifier, address information, status information, and home network information of the at least one third network element.

Optionally, the service feedback further includes an update result of the service input data. The transceiver unit is further configured to send a data synchronization request to the second network element, where the data synchronization request includes the update result of the service input data. The transceiver unit is further configured to receive a data synchronization response from the second network element.

Optionally, the service trigger event includes a service request from a fifth network element. The transceiver unit is further configured to send the service feedback to the fifth network element.

Optionally, the first network element and the fifth network element belong to different networks, and the different networks are user-level networks or operator networks, different user-level networks, or different network slices.

Optionally, the service input data is processed user data.

Optionally, the service input data is unprocessed user data. The processing unit is further configured to process the service input data to obtain processed user data.

Optionally, the processed user data includes at least one of the following: encrypted user data, user data from which user identification information is removed, a temporary user identifier, and an encrypted user identifier.

Optionally, the service trigger event is a session establishment request, and the service input data includes session subscription data. The transceiver unit is further configured to send a session policy request to the PCF, where the session policy request includes at least one of the following information: a data network name DNN and network slice information. The transceiver unit is further configured to receive a session policy response from the PCF, where the session policy response includes a session policy, and the session policy is generated based on the DNN and/or the network slice information.

Optionally, the transceiver unit is further configured to send a session establishment request to the SMF, where the session establishment request includes session policy information or session subscription information. The transceiver unit is further configured to receive a session establishment response from the SMF, where the session establishment response includes a session context.

According to a sixth aspect, a communication apparatus is provided, to implement the communication method according to the second aspect. For example, the communication apparatus may be a chip or a second network element. The method may be implemented by software, hardware, or hardware executing corresponding software.

In a possible implementation, the communication apparatus includes a transceiver unit and a processing unit. The transceiver unit is configured to receive an obtaining request from a first network element, where the obtaining request is used to request to obtain service input data or an obtaining credential of the service input data, and the obtaining credential of the service input data is a credential for obtaining the service input data. In addition, the transceiver unit is further configured to send an obtaining response to the first network element, where the obtaining response includes the service input data or the obtaining credential of the service input data.

Optionally, the first network element is configured to process different service requests in a network, the communication apparatus is configured to provide a data storage service for the first network element and/or at least one third network element, and the at least one third network element is a network element providing a network function, where the at least one third network element includes a session management function network element, an access and mobility management function network element, and a policy control function network element.

Optionally, the service input data is processed user data. The processing unit is configured to process the service input data to obtain processed user data.

Optionally, the processed user data includes at least one of the following: encrypted user data, user data from which user identification information is removed, a temporary user identifier, and an encrypted user identifier.

According to a seventh aspect, a communication apparatus is provided, to implement the communication method according to the third aspect. For example, the communication apparatus may be a chip or a third network element.

The method may be implemented by software, hardware, or hardware executing corresponding software.

In a possible implementation, the communication apparatus includes a transceiver unit and a processing unit. The transceiver unit is configured to receive a service request, where the service request includes service input data or an obtaining credential of the service input data. In addition, the processing unit is configured to execute a requested service based on the service request.

Optionally, the transceiver unit is further configured to send a service feedback to a first network element, where the service feedback includes a service execution result.

Optionally, the first network element is configured to process different service requests in a network, and the communication apparatus is an apparatus providing a network function, where the communication apparatus includes any one of the following: a session management function network element, an access and mobility management function network element, and a policy control function network element.

Optionally, the transceiver unit is further configured to receive the service request from the first network element.

Optionally, the transceiver unit is further configured to send a registration request to a fourth network element, where the registration request includes at least one of the following information: a capability, an identifier, address information, status information, and home network information of the third network element, and the fourth network element is configured to provide a network function discovery and selection service for the first network element. The third network element receives a registration response from the fourth network element.

Optionally, the transceiver unit is further configured to receive the service request from the fourth network element.

Optionally, the service request includes the obtaining credential of the service input data, and the transceiver unit is further configured to send an obtaining request to a second network element based on the obtaining credential, where the second network element is configured to provide a data storage service for the first network element and/or the communication apparatus. The transceiver unit is further configured to receive an obtaining response from the second network element, where the obtaining response includes the service input data.

Optionally, the service input data is processed user data.

Optionally, the processed user data includes at least one of the following: encrypted user data, user data from which user identification information is removed, a temporary user identifier, and an encrypted user identifier.

Optionally, the third network element is the PCF network element, and the service input data includes session subscription data. The transceiver unit is further configured to receive a session policy request, where the session policy request includes at least one of the following information: a data network name DNN and network slice information. The transceiver unit is further configured to send a session policy response to the first network element, where the session policy response includes a session policy, and the session policy is generated based on the DNN and/or the network slice information.

Optionally, the third network element is the SMF network element. The transceiver unit is further configured to receive a session establishment request, where the session establishment request includes session policy information or session subscription information. The transceiver unit is further configured to send a session establishment response to the first network element, where the session establishment response includes a session context.

According to an eighth aspect, a communication apparatus is provided, to implement the communication method according to the fourth aspect. For example, the communication apparatus may be a chip or a fourth network element. The method may be implemented by software, hardware, or hardware executing corresponding software.

In a possible implementation, the communication apparatus includes a transceiver unit and a processing unit. The transceiver unit is configured to receive a registration request from at least one third network element, where the registration request includes at least one of the following information: a capability, an identifier, address information, status information, and home network information of the third network element. The transceiver unit is further configured to send a registration response to the at least one third network element. The transceiver unit is further configured to receive a scheduling request from a first network element. The processing unit is configured to determine at least one scheduled third network element based on the scheduling request. In addition, the transceiver unit is further configured to send a scheduling response to the first network element, where the scheduling response includes at least one of the following information of the at least one scheduled third network element: a capability, an identifier, address information, and status information of the at least one third network element; or the transceiver unit is further configured to send the scheduling request to the at least one scheduled third network element.

Optionally, the first network element is configured to process different service requests in a network, the at least one third network element is a network element providing a network function, and the communication apparatus is configured to provide a network function discovery and selection service for the first network element, where the at least one third network element includes a session management function network element, an access and mobility management function network element, and a policy control function network element.

With reference to any one of the fifth aspect to the eighth aspect, in still another possible implementation, the communication apparatus in any one of the fifth aspect to the eighth aspect includes a processor coupled to a memory, and the processor is configured to support the apparatus in performing a corresponding function in the foregoing communication methods. The memory is configured to be coupled to the processor, and stores a program (instructions) and/or data necessary for the apparatus. Optionally, the communication apparatus may further include a communication interface, configured to support communication between the apparatus and another network element. Optionally, the memory may be located inside the communication apparatus, or may be located outside the communication apparatus. Optionally, the memory may be integrated with the processor.

With reference to any one of the fifth aspect to the eighth aspect, in still another possible implementation, the communication apparatus in any one of the fifth aspect to the eighth aspect includes a processor and a transceiver apparatus, the processor is coupled to the transceiver apparatus, the processor is configured to execute a computer program or instructions, to control the transceiver apparatus to receive and send information; and when the processor executes the computer program or the instructions, the processor is further configured to implement the foregoing method through a logic circuit or by executing code instructions. The transceiver apparatus may be a transceiver, a transceiver circuit, or an input/output interface, and is configured to: receive a signal from an apparatus other than the communication apparatus and transmit the signal to the processor, or send a signal from the processor to an apparatus other than the communication apparatus. When the communication apparatus is a chip, the transceiver apparatus is a transceiver circuit or an input/output interface.

When the communication apparatus in any one of the fifth aspect to the eighth aspect is a chip or a chip module, a sending unit may be an output unit, for example, an output circuit or a communication interface, and a receiving unit may be an input unit, for example, an input circuit or a communication interface. When the communication apparatus is a terminal or an access network device, a sending unit may be a transmitter or a transmitter machine, and a receiving unit may be a receiver or a receiver machine.

According to a ninth aspect, a computer-readable storage medium is provided. The computer-readable storage medium stores a computer program or instructions, and when a computer executes the computer program or the instructions, the methods in the foregoing aspects are implemented.

According to a tenth aspect, a computer program product including instructions is provided. When the instructions are run on a communication apparatus, the communication apparatus is enabled to perform the methods in the foregoing aspects.

According to an eleventh aspect, a communication system is provided, and the communication system includes the communication apparatuses in the fifth aspect to the eighth aspect.

### BRIEF DESCRIPTION OF DRAWINGS

FIG. 1 is a diagram of an architecture of a communication system according to an embodiment of this application;
FIG. 2a is a diagram of an architecture of a 5G network-based communication system according to an embodiment of this application;
FIG. 2b is a diagram of an architecture of another 5G network-based communication system according to an embodiment of this application;
FIG. 2c is a diagram of an architecture of still another 5G network-based communication system according to an embodiment of this application;
FIG. 3 is a diagram of evolution of a core network technology of a mobile network;
FIG. 4 is a diagram of interaction logic between some network elements of a 5G core network;
FIG. 5 is a schematic flowchart of a communication method according to an embodiment of this application;
FIG. 6 is a schematic flowchart of another communication method according to an embodiment of this application;
FIG. 7 is a diagram of an architecture of a multistage network according to an embodiment of this application;
FIG. 8A and FIG. 8B are a schematic flowchart of an example of a communication method in a session establishment scenario according to an embodiment of this application;
FIG. 9A and FIG. 9B are a schematic flowchart of an example of another communication method in a session establishment scenario according to an embodiment of this application;
FIG. 10A and FIG. 10B are a schematic flowchart of an example of a communication method in a terminal registration scenario according to an embodiment of this application;
FIG. 11 is a schematic flowchart of an example of a communication method in a service request scenario according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

This application is applicable to, may be applied to, or may be integrated into a core network architecture of a mobile network, including a core network architecture of a 5th generation (5th generation, 5G) mobile communication system, a 6th generation (6th generation, 6G) mobile communication system, a future evolved communication system, another communication system, or the like. This is not limited in this application.

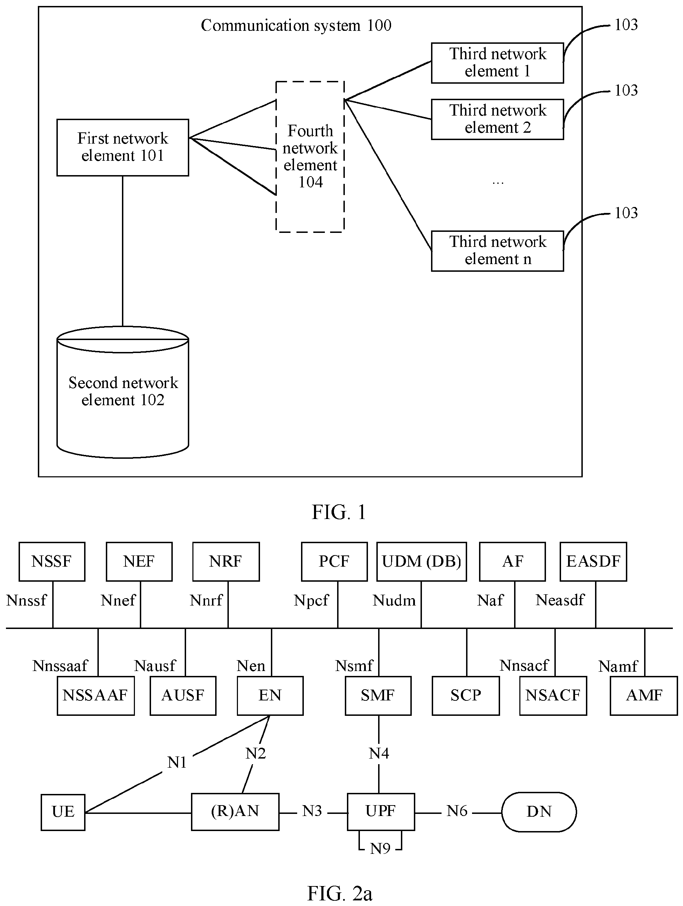

FIG. 1 is a diagram of an architecture of a communication system according to an embodiment of this application. The communication system 100 may include a first network element 101, a second network element 102, and at least one third network element 103 (where n third network elements are shown in the figure). The first network element 101 is configured to process different service requests in a network, the second network element 102 is configured to provide a data storage service for the first network element 101 and/or the at least one third network element 103, and the at least one third network element 103 is a network element providing a network function. For example, the first network element 101 is configured to obtain service input data or an obtaining credential of the service input data from the second network element 102 based on a received service trigger event. The first network element 101 is further configured to send a service request to the at least one third network element 103, where the service request includes the service input data or the obtaining credential of the service input data. Correspondingly, the third network element 103 is configured to execute a requested service based on the service request after receiving the service request. Correspondingly, the third network element 103 is further configured to send a service feedback to the first network element 101, where the service feedback includes a service execution result.

Optionally, the communication system 100 may further include a fourth network element 104 (represented by a dashed line in the figure). The fourth network element 104 is configured to provide a network function discovery and selection service for the first network element 101. For example, the at least one third network element 103 is further configured to send a registration request to the fourth network element 104, where the registration request includes at least one of the following information: a capability, an identifier, address information, status information, and home network information of the third network element 103. The fourth network element 104 is configured to send a registration response to the at least one third network element 103. The fourth network element 104 is further configured to receive a scheduling request from the first network element 101. The fourth network element 104 is further configured to determine at least one scheduled third network element based on the scheduling request. The fourth network element 104 is further configured to send a scheduling response to the first network element 101, where the scheduling response includes at least one of the following information of the at least one scheduled third network element: a capability, an identifier, address information, and status information of the at least one third network element; or the fourth network element 104 is further configured to send the scheduling request to the at least one scheduled third network element.

For example, the first network element 101 may also be referred to as an execution node (execution node, EN), an execution network element, an execution network function, an execution apparatus, or an execution module in this embodiment. A name of the network element is not limited in this application.

The second network element 102 may also be referred to as a database (database, DB), a data storage network element, a data storage network function, a data storage module, or a data storage apparatus in this embodiment. A name of the network element is not limited in this application.

The third network element 103 may also be referred to as a network function (network function, NF) in this embodiment. A name of the network element is not limited in this application.

The fourth network element 104 may also be referred to as a scheduling function, a scheduling module, or a scheduling apparatus in this embodiment. A name of the network element is not limited in this application.

The following provides architectures of several 5G network-based communication systems.

FIG. 2a is a diagram of an architecture of a 5G network-based communication system according to an embodiment of this application. In the architecture of the system, the foregoing first network element 101 (EN) may serve as a network function of the system, and is located at a network ingress between a core network and an access network. A unified data management (unified data management, UDM) and/or a unified data repository (unified data repository, UDR) in the system may serve as the foregoing second network element 102 (DB). Another network function in the architecture may serve as the foregoing third network element 103. In addition, a network repository function (network repository function, NRF) and/or a service communication proxy (service communication proxy, SCP) in the system may serve as the foregoing fourth network element 104.

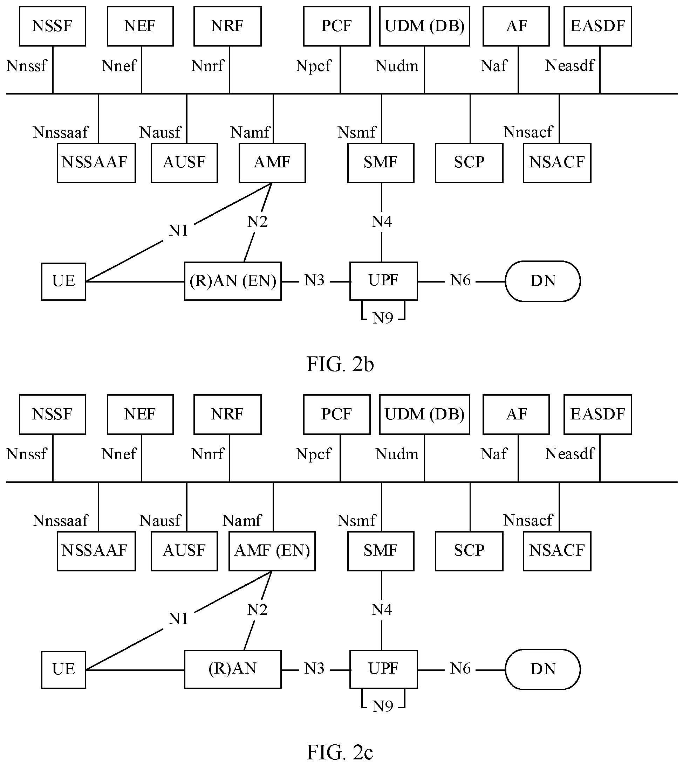

FIG. 2b is a diagram of an architecture of another 5G network-based communication system according to an embodiment of this application. The foregoing first network element 101 (EN) may alternatively be integrated into an existing access network function. As shown in FIG. 2b, the foregoing first network element 101 (EN) is integrated into a (radio) access network ((radio) access network, (R)AN).

FIG. 2c is a diagram of an architecture of still another 5G network-based communication system according to an embodiment of this application. The foregoing first network element 101 (EN) may alternatively be integrated into an existing core network function. As shown in FIG. 2c, the foregoing first network element 101 (EN) is integrated into an access and mobility management function (access and mobility management function, AMF).

In an existing network architecture, a coupling relationship between network functions (network elements) is strong, the network functions are extremely "heavy", logic of the network architecture is complex, and disaster recovery is difficult, and therefore this is not friendly to a third party and does not facilitate flexible and convenient network deployment and management.

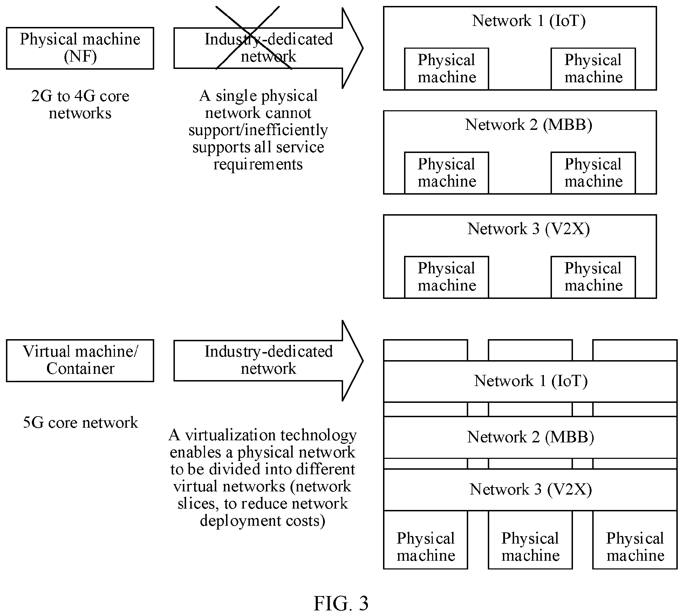

FIG. 3 is a diagram of evolution of a core network technology of a mobile network. From the perspective of a development trend of the core network technology of mobile communication networks from a 2nd generation (2nd generation, 2G) to 5G, evolution from an implementation of a 2G physical machine to cloudification of a part of a 5G core network and a network technology (internet technology, IT)-based mobile network have become a major trend in network development. In FIG. 3, for 2G to 4G core networks, software and hardware are implemented on one or more physical machines. The one or more physical machines are dedicated servers. A single physical network cannot support all service requirements (for example, an internet of things (internet of things, IoT), mobile broadband (mobile broadband, MBB), and vehicle-to-everything (vehicle-to-X, V2X)), or can only inefficiently support these service requirements. For the 5G core network, functions of different network elements may be implemented on a same common physical machine. Based on an implementation of an IT technology on a network device, an operator may use common hardware to load different software-based network functions, to simplify deployment and reduce costs. In a 5G network, a virtualization technology may be used to enable a physical network to be logically divided into different virtual networks (namely, network slices (network slices)) (as shown in FIG. 3, one physical machine may be logically divided into a total of three sub-networks: a network 1 (for example, the IoT), a network 2 (for example, the MBB), and a network 3 (for example, the V2X)), to provide differentiated network connection services for a user. If an original implementation of a physical machine is still used, independent physical networks need to be deployed for different network slices (for example, in FIG. 3, one or more independent physical machines need to be deployed for each of the network 1, the network 2, and the network 3), and a single physical network cannot support/inefficiently supports all service requirements. This does not facilitate flexible network deployment.

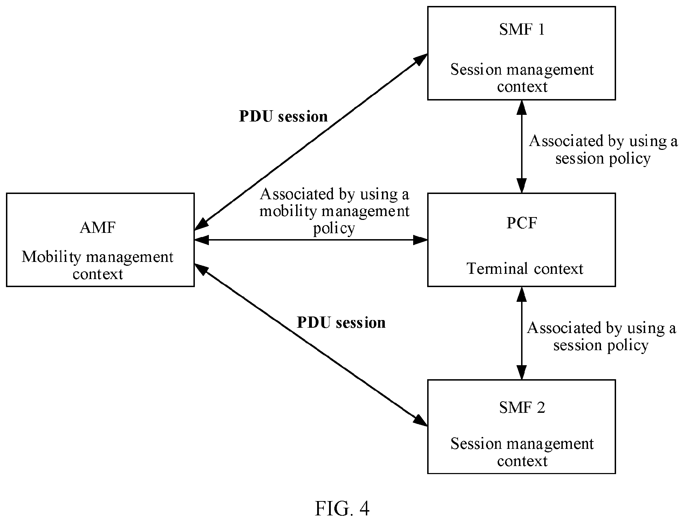

A core network of an existing 5G mobile communication system is used as an example. An entire network architecture is designed based on a network element (or referred to as a network function), and each network element has a specific function. For example, an AMF is responsible for access and mobility management of a terminal, forwarding a message between the network element and the terminal to another network element in the network, and the like. A session management function (session management function, SMF) is responsible for managing a protocol data unit (protocol data unit, PDU) session of the terminal. A user plane function (user plane function, UPF) forwards a user plane data packet for the terminal. A policy control function (policy control function, PCF) configures a related policy for another network element like the AMF or the SMF, for example, an access and mobility management policy (whether the terminal can access the network or when and where the terminal can access the network) or a session management policy (a specific rule that should be used for transmission of application data that can be transmitted by using the PDU session of the terminal, and the like). FIG. 4 is a diagram of interaction logic between some network elements of an existing 5G core network, where the interaction logic is interaction logic of the foregoing AMF, the foregoing SMF, and the foregoing PCF.

It should be noted that the foregoing functional entities are only names, and the names do not constitute a limitation on the entities. For example, a session management functional entity may alternatively be replaced with a "session management function" or another name. In addition, the session management functional entity may alternatively correspond to an entity that includes another function in addition to the session management function. A user plane functional entity may alternatively be replaced with a "user plane function" or another name. In addition, the user plane functional entity may alternatively correspond to an entity that includes another function in addition to the user plane function. The access and mobility management function may be divided into two functions: an access management (access management) function and a mobility management function (mobility management function). Unified descriptions are provided herein. Details are not described below.

In an existing network logical architecture shown in FIG. 4, strong coupling is required between network elements. For example, for a PDU session 1, the AMF can interact only with an SMF 1. If the SMF 1 is faulty, a session management (session management, SM) context is lost.

It can be learned that, in a current communication system, a coupling relationship between the network elements is strong, logic of the network architecture is complex, and disaster recovery is difficult, and therefore this is not friendly to a third party. In addition, each network element needs to independently maintain a context related to a user, and may directly access subscription data of the user (where each network element obtains subscription information from a UDM/UDR based on the obtained subscription data, and generates the related context based on the subscription information). In this case, privacy data of the user is frequently transmitted in a network, and security is reduced.

Serverless computing (serverless computing) (referred to as serverless for short) is also referred to as function-as-a-service (Function-as-a-Service, FaaS), and is a cloud computing model. Based on platform as a service (platform as a service, PaaS), the serverless computing provides a mini-architecture. A terminal customer does not need to deploy, configure, or manage a server service, as all server services required for code running are provided by a cloud platform. The serverless computing does not mean that a server is really not needed. Instead, it means that a developer does not need to consider much about a server problem, and a computing resource serves as a concept of a service instead of a concept of a server. The serverless computing is a technology for constructing and managing a microservice-based architecture, allows the developer to manage application deployment at a service deployment level instead of a server deployment level, and can even manage deployment of a specific function or port, so that the developer quickly performs iteration and develops software faster.

However, at a current stage, the serverless computing is primarily applicable to event-based and short-time task-based applications. A function for the user to compile a task has a constraint on execution time and resources. A platform provider obtains maximum scheduling permission based on this. Therefore, the platform provider provides pricing policies of charging by times and on-demand charging. This is well applied in service-driven scenarios with massive terminals, and advantages of on-demand elasticity and on-demand charging of the serverless computing are fully utilized. It is clear that such an application scope is insufficient to meet an expectation of a cloud vendor.

Although the serverless computing is widely used, the serverless computing has usage limitations. The serverless computing is suitable to the following scenarios:
- asynchronous concurrency, where a component can be independently deployed and expanded;
- dealing with burst or unpredictable service usage (is mainly to reduce costs, because a serverless computing application does not charge when the serverless computing application is not running);
- a temporary and stateless application, which is insensitive to cold start time; and
- a service that needs to be quickly developed and iterated.

Based on this, the serverless computing is very suitable for real-time file processing, periodic data processing and migrating, serving as a backend of a world wide web (world wide web, Web) application, and the like.

However, a design idea of the serverless computing is currently used only for an IT network, and is not involved in a design of a mobile network architecture.

To resolve a problem that in an existing network architecture, a coupling relationship between network functions (network elements) is strong, the network functions are extremely "heavy", logic of the network architecture is complex, and disaster recovery is difficult, and therefore this is not friendly to a third party and does not facilitate flexible and convenient network deployment and management, this application provides a communication solution: A first network element obtains service input data or an obtaining credential of the service input data from a second network element based on a received service trigger event, and sends a service request to at least one third network element. The at least one third network element executes a requested service based on the service request, and sends a service feedback to the first network element. In the communication solution in this application, a new core network architecture implemented by using a serverless architecture is provided, so that the first network element uniformly processes the service request or processes different service requests, and invokes the at least one third network element in a network, and third network elements have no coupling relationship or a weak coupling relationship, thereby improving flexibility of network deployment and management.

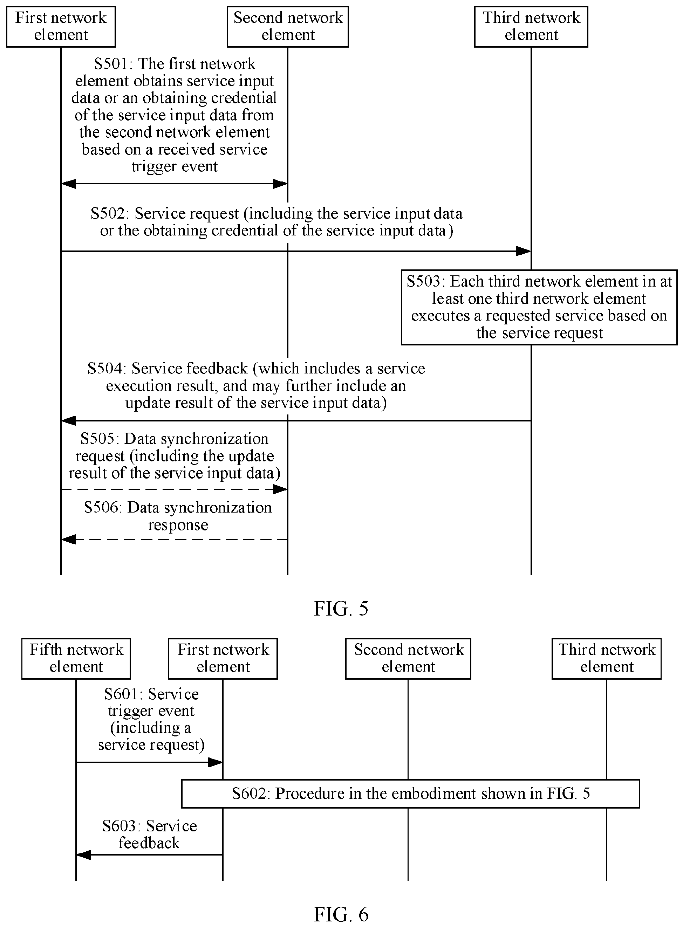

FIG. 5 is a schematic flowchart of a communication method according to an embodiment of this application. The method may be applied to the communication system shown in FIG. 1. For example, the method may include the following steps.

S501: A first network element obtains service input data or an obtaining credential of the service input data from a second network element based on a received service trigger event.

In this embodiment, the first network element is configured to process different service requests in a network.

The first network element may perform subsequent service invoking based on a logical relationship of service processing or a type of template or a type of script, where the type of template or the type of script includes the logical relationship of the service processing. The first network element may provide services for different network types or service types. For example, for a personal home network, there may be a first network element used for a home network; and for a dedicated network (for example, a campus-dedicated network or vehicle-to-everything), there may be a corresponding first network element. Different first network elements may invoke different network services. For example, the first network element in the home network basically invokes a connection-type network service (for example, a session establishment or management service used for high-bandwidth transmission). In addition to invoking a connection-type service, the first network element in the vehicle-to-everything may further invoke, for example, a network environment sensing service and an artificial intelligence (artificial intelligence, AI) service.

A function granularity of the first network element may be determined based on a specifically provided service, so that the function granularity deployed for the first network element is more flexible, and different service requirements are satisfied. The first network element may be at a terminal (group) granularity, a service granularity, or a network-level granularity. Examples are as follows:
(1) The first network element is at the terminal (group) granularity.

For example, the first network element serves only the following specific terminal (group):
a home network terminal;
a local area network (local area network, LAN) terminal; or
a terminal in an industrial scenario.

(2) The first network element may be at the service granularity.

For example, the first network element provides a service for a terminal executing a specific service.

The first network device is created based on a request initiated by an application function (application function, AF), and provides, for example, a slice service.

### (3) Network-level granularity

For example, the first network element provides the following service for a terminal in a network:
a large network service, for example, an MBB service or a voice service; or
a service of a special network, for example, the vehicle-to-everything, an internet of things, or a satellite communication network.

The service trigger event received by the first network element may be any one or more of the following service trigger events: terminal initiation, initiation performed by another node (for example, a fifth network element) in the network, internal periodic initiation, or event-triggered initiation. Specific examples may be but are not limited to the following cases.

The terminal initiation may be that the first network element receives a request message or an indication message of a terminal, for example, a non-access stratum (non-access stratum, NAS) message, a session establishment request, a service request message, or a registration request message of the terminal.

The initiation performed by the another node in the network may be that the first network element receives a service request message or a control message of a network function, the fifth network element, or a management function in an operator-level network. For example, when subscription or a service of the terminal expires, the management function in the operator-level network may notify the first network element to stop serving the terminal; when the fifth network element needs to obtain data of the terminal, the fifth network element may initiate a terminal data request message to the first network element; or when an air interface resource on an access network side changes, an access network element may notify the first network element to change a session parameter of the terminal. The fifth network element and the first network element belong to different networks, for example, different sub-networks, different network slices, and different network domains.

The internal periodic initiation may be periodic registration update of the terminal, update of a terminal policy (for example, a session policy, an access management policy, or a mobility management policy), policy update of a network service (for example, update of a quantity of terminals that can be accommodated in the network, update of a geographical location served by the network, and update of a quality of service (quality of service, QoS) parameter that can be provided by the network), and the like.

The event-triggered initiation may be a service behavior triggered based on some events. For example, when the terminal moves to a location, update of an access policy for the terminal is triggered.

After receiving any one or more of the foregoing service trigger events, the first network element may obtain the service input data from the second network element. The second network element provides a data storage service for the first network element and/or a third network element, and the data storage service is invoked by the first network element and/or the third network element. Data stored in the second network element may be data at a terminal granularity, for example, subscription data of the terminal, policy information of the terminal in the network, and context data (for example, a session context and a context related to mobility management) of the terminal in the network; may be a service that is provided for the third network element and that is for storing a temporary file, for example, a user plane context maintained by an SMF, or a data analytics file maintained by a data analytics network element; or may be data at a service granularity, for example, a parameter (for example, a QoS parameter, location information of an application server, address information, and terminal list information) of an application. In an existing communication system, each third network element needs to independently maintain a user plane context. Once any third network element is faulty, the user plane context maintained by the third network element may be lost. In this embodiment, an independent second network element provides the data storage service for the first network element and/or the third network element, and the first network element and each third network element do not need to independently maintain related service data, thereby improving storage efficiency and security of the data.

The second network element may be separately deployed based on data types. For example, the second network element that stores the subscription data of the terminal may be centrally deployed by an operator; terminal-dedicated data may be deployed nearby a terminal side or independently deployed; data of a campus in an industrial scenario may be independently deployed in the campus; and data of the home network terminal may be deployed at home or in a nearby community.

The second network element may alternatively be deployed together with the first network element. For example, the first network element serving the home network terminal may be deployed together with the second network element at home; or two functions are implemented by same hardware or software (similar to a home network server, a set-top box, or the like).

Service input data invoked by the first network element and/or the third network element is data required for a network service, for example, a data network name (data network name, DNN) and/or slice information provided when a session-related policy is obtained or when a session is established. For example, that the first network element obtains the service input data from the second network element based on the received service trigger event may be that the first network element may send an obtaining request to the second network element based on the received service trigger event, where the obtaining request is used to request to obtain the service input data. After receiving the obtaining request, the second network element sends an obtaining response to the first network element, where the obtaining response includes the service input data.

Further, the second network element may process to-be-sent service input data to obtain processed user data, so that security in a service input data transmission process can be improved. In other words, the service input data provided by the second network element is the processed user data. For example, processing user data includes at least one of the following: encrypting user identification information in the user data, replacing a subscription permanent identifier (subscription permanent identifier, SUIP) or an international mobile subscriber identity (international mobile subscriber identity, IMSI) with a temporary identifier, removing the user identification information from the provided user data, performing integrity protection on the user data (by using, for example, an encryption manner such as homomorphic encryption), and the like. However, in the existing communication system, a UDM/UDR does not perform security processing on subscription data of a user and the like that are provided by the UDM/UDR, and each third network element may directly access the subscription data of the user.

For example, before the first network element sends unprocessed service input data to at least one third network element, the first network element may also process the service input data in a manner similar to that of the second network element, to obtain processed user data.

To reduce signaling message overheads for carrying data of a terminal in a message and avoid frequent transmission of sensitive data of the terminal in a network, the second network element may return a (temporary) service input data credential to the first network element. The obtaining credential of the service input data is a credential for obtaining the service input data, for example, an identifier, a key (key), or a token (token). In other words, after receiving any one or more of the foregoing service trigger events, the first network element may obtain the obtaining credential of the service input data from the second network element, so that the third network element can subsequently obtain corresponding data from the second network element based on the service input data credential.

Alternatively, the first network element may allocate a (temporary) service input data credential and notify the second network element, so that the third network element can subsequently obtain corresponding data from the second network element based on the service input data credential.

The first network element obtains the service input data from the second network element based on the received service trigger event. There may be two obtaining forms. One form is obtaining data on demand. For example, when an access management service needs to be executed, subscription data related to terminal access is obtained; or when a session needs to be established for a terminal, subscription data related to the session is obtained. The other form is global obtaining. To be specific, after a terminal accesses a network or passes network authentication, the first network element obtains all related data of the terminal, for example, all subscription data of the terminal, from the second network element. Then, during task execution, the first network element selects related subscription information based on the obtained subscription of the terminal, to perform subsequent service invoking.

S502: The first network element sends a service request to the at least one third network element.

Correspondingly, the at least one third network element receives the service request.

The first network element requests, to the at least one third network element, to invoke a corresponding network service, and provides service input data that needs to be used for the service. For example, the first network element sends the service request to the at least one third network element, where the service request includes the service input data obtained by the first network element from the second network element.

Alternatively, the service request may include the obtaining credential of the service input data. In this case, the at least one third network element may obtain the service input data from the second network element based on the obtaining credential of the service input data. The service input data may be unprocessed user data or processed user data.

For example, the service trigger event includes at least one of the following: a communication service request initiated by a terminal, a communication service request initiated by the fifth network element, a periodic communication service, and an event-triggered communication service. One service trigger event may be associated with one or more third network elements. For example, in a session establishment scenario, the service trigger event is a session establishment request initiated by the terminal, and third network elements associated with the service trigger event include a PCF, an SMF, and a UPF. In a registration scenario, the service trigger event is a registration request initiated by the terminal, and third network elements associated with the service trigger event include a PCF and an AMF. In a service scenario, the service trigger event is a service request initiated by the terminal, and third network elements associated with the service trigger event include an SMF and an AMF. In this case, the first network element separately sends the service request to at least one third network element associated with the service trigger event, where the service request includes the service input data obtained by the first network element from the second network element and a service execution result obtained from another third network element in the at least one third network element. For example, in the session establishment scenario, service input data sent by the first network element to the SMF includes session-related subscription data that is of the terminal and that is obtained from the second network element and session policy information that is obtained from the PCF. The first network element separately receives a service feedback from the at least one third network element.

The third network element is configured to provide a network service, and the third network elements have corresponding names based on different provided service content. For example, in a 5G network, the AMF provides an access and mobility management service, the SMF provides a session management function, and the PCF provides network policies related to a user, a session, access and management, and the like. For example, the at least one third network element may be the SMF, the AMF, the PCF, or the like.

In this embodiment, the service provided by the third network element is not limited, and may be a network function in the conventional technology or a new function defined in a future network, for example, a network function providing a computing service or a network function providing data processing. A difference lies in that logic of processing the service request by the third network element changes. For example, in an existing session establishment scenario, after an SMF receives a session establishment request of a terminal, the SMF obtains session-related subscription data of the terminal from a UDM/UDR, and the SMF interacts with another network element to establish a subsequent session. However, in this embodiment, the first network element may uniformly process the session establishment request, and invoke the SMF, the PCF, and the UPF that are used for a session service, and the SMF, the PCF, and the UPF have no coupling relationship or a weak coupling relationship. This may improve flexibility of network deployment and management. In addition, the first network element uniformly obtains the service input data from the second network element and sends the service input data to a related third network element; or the first network element obtains the obtaining credential of the service input data and sends the obtaining credential to a related third network element, and the related third network element obtains the service input data from the second network element. The third network element cannot directly access the service input data. This avoids frequent transmission of privacy data of a user in the network and improves security of the data.

For example, that the first network element sends the service request to the at least one third network element may be that the first network element sends the service request to the at least one third network element based on execution logic of a service. The execution logic of the service includes at least one of the following information: at least one third network element that needs to be invoked for each service, a scheduling sequence of the at least one third network element, a format of service input data corresponding to each third network element, content of the service input data corresponding to each third network element, and information about each third network element (for example, identification information and address information of the third network element).

Herein, the execution logic of the service may correspond to a service provided by the network for the terminal, for example, a service for establishing a connection from the terminal to a data network (data network, DN) (referred to as a PDU session connection service in 5G), a data storage service, or a data analytics or prediction service. Network functions that need to be invoked for different services are different. For example, the SMF, the PCF, and the UPF may need to be invoked for the connection service; a data storage function needs to be invoked for the data storage service; and a computing-related network function (for example, a network data analytics function (network data analytics function, NWDAF) in 5G) needs to be invoked for the data analytics or analytics service. Specifically, a network function that needs to be invoked for each service, an invoking sequence, a format and content of input data that need to be provided by each network function, and the like may be referred to as execution logic of the service. The execution logic of the service may be implemented in a form of a script, a segment of code, or the like, and may be preconfigured or configured by a network function for the first network element.

For example, the communication system shown in FIG. 1 may further include a fourth network element. The fourth network element provides a network function discovery and selection service for the first network element, which is similar to an NRF function in an existing 5G standard. A third network element providing a single network service may register a capability, an identifier, address information, status information, home network information, and the like of the third network element with the fourth network element. For example, the third network element may send a registration request to the fourth network element. Correspondingly, the fourth network element receives the registration request. The registration request includes at least one of the following information: the capability, the identifier, the address information, the status information, and the home network information of the third network element. After receiving the registration request, the fourth network element stores at least one of the foregoing information, and sends a registration response to the at least one third network element.

The first network element may invoke a corresponding network function via the fourth network element based on the execution logic of the service. When the first network element needs to use a network function, the first network element may initiate a corresponding network function service invocation request to the fourth network element. The fourth network element may select, based on network function information learned by the fourth network element and the request of the first network element, one or more third network elements that can provide a service for the first network element, and feed back address or identification information of the third network element to the first network element, so that the first network element initiates a subsequent service request.

Therefore, that the first network element sends the service request to the at least one third network element may alternatively be replaced with that the first network element sends a scheduling request to the fourth network element. The fourth network element determines at least one scheduled third network element based on the received scheduling request. The fourth network element sends a scheduling response to the first network element. Correspondingly, the first network element receives the scheduling response. The scheduling response includes at least one of the following information of the at least one scheduled third network element: a capability of the at least one third network element or a network service provided by the at least one third network element, an identifier, address information, and status information of the at least one third network element.

Alternatively, that the first network element sends the service request to the at least one third network element may be replaced with that the first network element sends a scheduling request to the fourth network element. The fourth network element determines at least one scheduled third network element based on the received scheduling request. The fourth network element sends the scheduling request to the at least one scheduled third network element. For example, the fourth network element may further send a scheduling response to the first network element.

Alternatively, a scheduling function may be configured in the first network element in a static or dynamic manner. For example, information about a network function (for example, identification information, address information, or a status of the network function) is preconfigured in the first network element. When the first network element needs to invoke a network function, the first network element may determine, based on the preconfigured information, information about the network function that needs to be invoked. In this case, the fourth network element is optional, and is represented by a dashed line in the figure.

The service input data may be the processed user data. The third network element no longer obtains the unprocessed user data, but the first network element sends the processed user data to the third network element, and the third network element provides a corresponding service. Data provided by the first network element or obtained by the third network element from the second network element is processed user data, that is, anonymized data. In this way, excessive exposure of privacy data of a terminal can be avoided.

For example, if the service request includes the obtaining credential of the service input data, further, each third network element in the at least one third network element may obtain the service input data from the second network element based on the obtaining credential. Specifically, the at least one third network element may send an obtaining request to the second network element based on the obtaining credential. After receiving the obtaining request, the second network element sends an obtaining response to the at least one third network element, where the obtaining response includes the service input data.

S503: Each third network element in the at least one third network element executes a requested service based on the service request.

One service request may relate to one or more third network elements. After receiving the service request from the first network element or the scheduling request from the fourth network element, each third network element may execute the requested service based on the service request and the service input data carried in the service request. For example, the third network element may be the SMF, and the service request is a session establishment request initiated by a terminal. In this case, the SMF may generate a corresponding session context based on a session-related parameter (a DNN and network slice information), information about a RAN side accessed by the terminal (address information, a port number, and the like of a base station), session-related subscription data that is of the terminal and that is obtained by the first network element from the second network element, and the like.

S504: Each third network element in the at least one third network element sends a service feedback to the first network element.

Correspondingly, the first network element receives the service feedback.

The service feedback includes the service execution result.

Further, after completing the service, the third network element may update data in the second network element, for example, update a context of the terminal. Therefore, the service feedback may further include an update result of the service input data. The method may further include the following steps (represented by dashed lines in the figure).

S505: The first network element sends a data synchronization request to the second network element.

Correspondingly, the second network element receives the data synchronization request.

The data synchronization request includes the update result of the service input data.

S506: The second network element sends a data synchronization response to the first network element.

In alternative steps of steps S504 to S506, the service feedback sent by each third network element in the at least one third network element to the first network element may include only the service execution result, and each third network element in the at least one third network element sends a data synchronization request to the second network element, where the data synchronization request includes an update result of the service input data. In addition, after receiving the data synchronization request, the second network element performs data update, and sends a data synchronization response to each third network element, to complete the data update.

Therefore, the third network element may not need to maintain a context of the terminal for a long time, but store the data in the second network element, and invoke the data when the data needs to be used subsequently. An advantage is that the third network element may provide an instantaneous service, and does not need to maintain the context of the terminal for a long periodicity, thereby improving service efficiency. In addition, if the third network element is faulty, impact on data of the terminal can be reduced, and only another function instance needs to be invoked, thereby improving network robustness.

According to the communication method provided in this embodiment of this application, a new core network architecture implemented by using a serverless architecture is provided, so that the first network element uniformly processes the service request, and invokes the at least one third network element in the network, and third network elements have no coupling relationship or a weak coupling relationship, thereby improving flexibility of network deployment and management.

The foregoing embodiment describes a solution for invoking a network service or data in a sub-network. The following embodiment describes how to invoke a network service or data between different sub-networks.

FIG. 6 is a schematic flowchart of another communication method according to an embodiment of this application. The method may be applied to the communication system shown in FIG. 1. For example, the method may include the following steps.

S601: A fifth network element sends a service trigger event to a first network element.

Correspondingly, the first network element receives the service trigger event.

In this embodiment, the service trigger event is from the fifth network element. The service trigger event includes a service request of the fifth network element.

The first network element and the fifth network element belong to different networks, for example, different sub-networks, different network slices, and different network domains. The fifth network element is configured to uniformly process a service in a network to which the fifth network element belongs.

In an implementation, the first network element and the fifth network element may belong to different network slices. For example, the first network element belongs to a network slice 1, and the fifth network element belongs to a network slice 2.

In addition, an entire mobile network may be divided into two types: an operator-level network and a user-level network. The operator-level network may provide functions such as an initial access authentication and authorization function, access management (access management, AM), a charging function (charging function, CHF), user-level network mutual discovery, and a network control function (network control function, NCF) for user-level network access. The user-level network may provide differentiated network services based on terminal requirements and network features (where for example, existing network slices provide differentiated connection services).

The following shows an example of an architecture of the user-level network and the operator-level network.

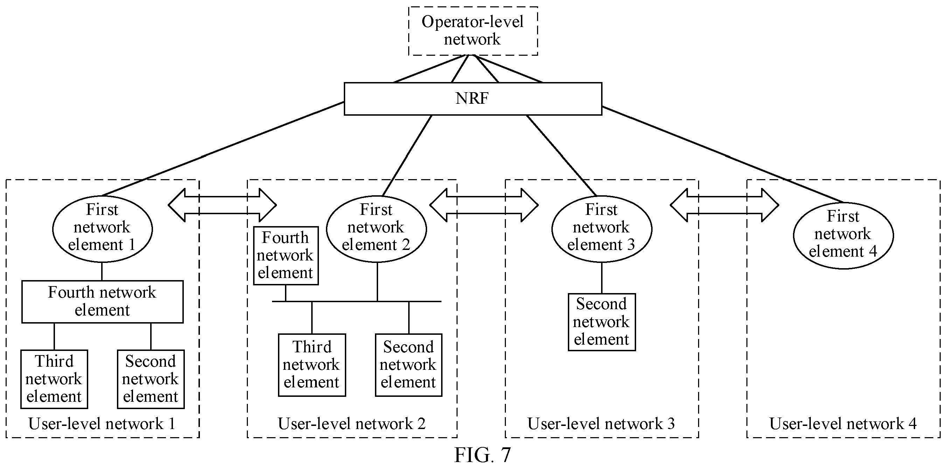

FIG. 7 is a diagram of an architecture of a multistage network according to an embodiment of this application. The figure provides several sub-network (namely, user-level network) deployment solutions.
(1) A user-level network 1 may include a complete network service function, and includes a first network element, a second network element, a third network element, and a fourth network element. The fourth network element may be an NRF or an SCP. The first network element and the third network element or third network elements may directly discover each other via the NRF or the SCP for interaction.
(2) A user-level network 2 includes a first network element, a second network element, a third network element, and a fourth network element. The user-level network 2 uses a service-based architecture, and the network elements communicate with each other in a manner of an existing 5G network. For example, the user-level network 2 may be an enterprise campus, and some third network elements are deployed inside an enterprise to manage network functions inside the enterprise without using a service of an operator; or a third network element of an operator network may be used.
(3) A user-level network 3 includes only a first network element and a second network element. The first network element serves as an execution node of the sub-network, and processes a user request in the network and external service openness. The second network element may store privacy data in the sub-network, for example, subscription information, policy information, and the like of a terminal in the sub-network. Based on this networking mode, it can be ensured that data of the terminal does not go out of the network. This ensures security the data of the terminal. For example, the user-level network 3 may be an enterprise campus, and the second network element is deployed inside an enterprise. This networking mode does not include a third network element. Therefore, a third network element of an operator network or another sub-network needs to be invoked to execute a corresponding network service.
(4) A user-level network 4 includes only a first network element, in other words, the user-level network 4 may autonomously control processing logic of a service of the sub-network via the first network element, but needs to use a third network element and a second network element of an operator network to execute a specific service. It may be found that, in a deployment manner of the user-level network 4, a function of the sub-network may be extremely simple, and the first network element may even be deployed on an access network side. For example, the user-level network 4 may be a home network.

The user-level network may have limited network functions. When a service of another sub-network or a service of an operator-level network needs to be used, a service of another network may be applied for by invoking a service request between first network elements. Another network, a corresponding first network element, or a network function that can be supported may obtain information about a corresponding network or first network element by querying the NRF or another similar query server.

One terminal may simultaneously access a plurality of sub-networks (user-level networks/network slices), and may have an independent identity in each sub-network (where for example, a terminal in each user-level network has a temporary identity/identifier). The terminal may control a first network element in each sub-network, so that service invoking, data sharing, or the like may be performed between different sub-networks. For example, in FIG. 7, a terminal may simultaneously access the user-level network 1 and the user-level network 3. The user-level network 1 corresponds to a public network (in other words, provides an internet connection service, a voice communication service, and another service), and the user-level network 3 corresponds to a private network (for example, a home network). A user may authorize the user-level network 1 to obtain data of the terminal, for example, data of an internet access behavior habit in the home network, from the user-level network 3. Based on a design of a network architecture, a first network element 1 may obtain information about data in the user-level network 3 via a first network element 3. Similarly, if a network function service in the user-level network 1 needs to be used in the user-level network 3, the first network element 3 in the user-level network 3 may also initiate a request for a corresponding network service to the user-level network 1.

Based on a design idea of the architecture of the multistage network, an operator may serve as a provider of a network access service and a provider of a network function service to provide services for different sub-networks. However, only an independent first network element needs to be deployed in a sub-network (or an independent second network element is additionally deployed) to enjoy a network service of the operator. In comparison with an implementation like a network slice or a private network in the conventional technology, in this implementation, deployment is easier, and user data can be better protected (where the data is stored only in the sub-network).

In another implementation, the first network element and the fifth network element may belong to different user-level networks.

In still another implementation, the first network element belongs to a user-level network, and the fifth network element belongs to an operator network; or the first network element belongs to an operator-level network, and the fifth network element belongs to a user-level network.

An association between the first network element and the fifth network element may be locally configured by using a script. For example, the fifth network element needs to use some services of the first network element, and the specific services and information about the first network element corresponding to the services (or information about a sub-network in which the services are located) may be configured in the fifth network element. When a service triggers that the fifth network element needs to invoke some services, the fifth network element initiates a service request to the first network element based on a local configuration. It is clear that the fifth network element may alternatively obtain, in a query manner (for example, via an NRF or a server having a query function), the services and the information about the first network element corresponding to the services (or the information about the sub-network in which the services are located). The sub-network herein may provide a service specific to the sub-network for another sub-network, the operator network, or an outside of the network (for example, a third-party application server), for example, a data service (sharing data in the sub-network, where the data includes user behavior data, AI model data, and the like), a computing service (providing a computing power service for another network or a user), or another special network service. For example, an AI model trained by the sub-network may be opened to another network for use. Self-used computing power servers may be deployed in some sub-networks. In this case, the some sub-networks may provide computing power services for other sub-networks, and the like. (The sub-network in which the first network element is located may train some AI models and open the AI models to another sub-network.) For example, the fifth network element is located in a home network, needs to establish a sessionestablish a session, and requests, to the first network element, to establish the sessionestablish the session.

S602: After receiving the service trigger event, the first network element may execute the service request with reference to the procedure in the embodiment shown in FIG. 5.

S603: The first network element sends a service feedback to the fifth network element.

Correspondingly, the fifth network element receives the service feedback.

According to the communication method provided in this embodiment of this application, a service invocation method between sub-networks is provided. A main corresponding scenario is that, in addition to a service of an operator-level network, the sub-networks may also provide a service, for example, a data sharing service or a computing service, externally (for another sub-network or an outside of a core network). According to the method in this embodiment, a more flexible business mode may be provided for a future network. However, in an existing communication system, this type of multistage network deployment architecture is not involved, and there is a unified network deployment architecture. Network deployment is not flexible enough, and a development scale is large.

The foregoing embodiment describes a solution for invoking a network service or data in a sub-network or between sub-networks. The following describes, by using an example, how a first network element invokes a network service or data in a specific communication scenario.

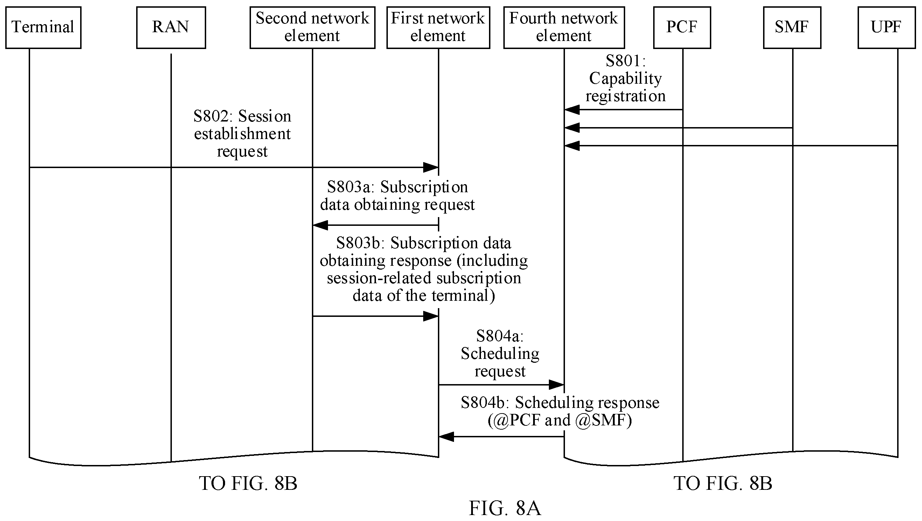

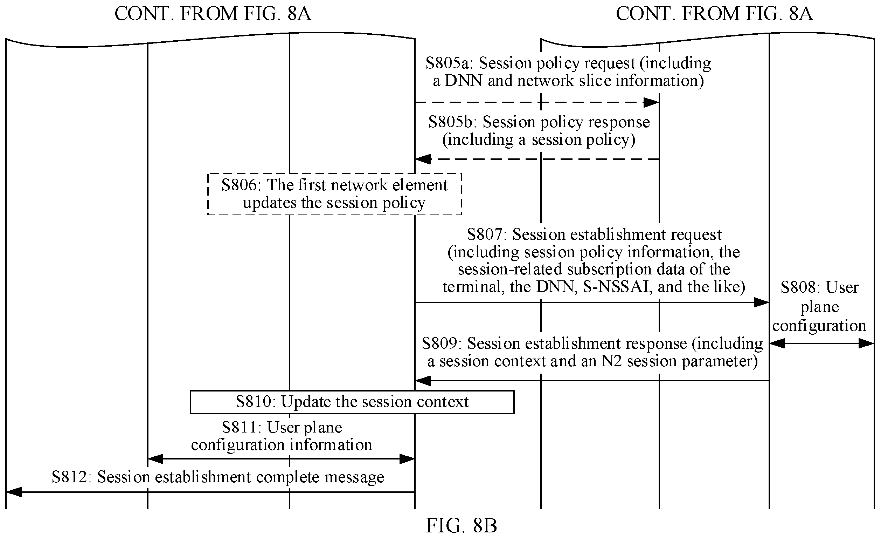

FIG. 8A and FIG. 8B are a schematic flowchart of a communication method in a session establishment scenario according to an embodiment of this application. Third network elements involved in the session establishment scenario include a PCF, an SMF, and a UPF. For example, the method may include the following steps.

S801: The PCF, the SMF, and the UPF separately perform capability registration with a fourth network element.

When the PCF, the SMF, and the UPF perform capability registration, at least one of the following information is carried: a capability, an identifier, address information, status information, and home network information of the PCF/SMF/UPF.

S802: A terminal sends a session establishment request to a first network element.

The session establishment request is used to request to establish a session. The session establishment request includes at least one of the following information: an identifier of the terminal, a session identifier, a data network name (data network name, DNN), and slice information.

S803a: After receiving the session establishment request, the first network element sends a subscription data obtaining request to a second network element.

The subscription data obtaining request is used to request to obtain session-related subscription data of the terminal.

S803b: After receiving the subscription data obtaining request, the second network element sends a subscription data obtaining response to the first network element.

The subscription data obtaining response includes the session-related subscription data of the terminal.

However, in an existing session establishment scenario, after receiving a session establishment request of a terminal, a RAN forwards the session establishment request to an SMF. After receiving the session establishment request of the terminal, the SMF obtains session-related subscription data of the terminal from a UDM/UDR. In other words, the SMF may directly access the subscription data of the terminal, and then the SMF interacts with another network element based on the subscription data of the terminal to establish a subsequent session. In this case, privacy data of a user is frequently transmitted in a network, and security is reduced.

In this embodiment, the first network element uniformly obtains the session-related subscription data from the second network element and sends the session-related subscription data to the SMF, but the SMF cannot directly access the session-related subscription data of the terminal. This avoids frequent transmission of privacy data of a user in a network, and improves security of the data.

S804a: The first network element sends a scheduling request to the fourth network element.

The scheduling request is used to obtain, from the fourth network element based on a service requested by the terminal, information about all third network elements related to the service.

For example, the scheduling request may include processing logic of a service of the first network element.

Alternatively, the first network element may send the scheduling request to the fourth network element for a plurality of times based on the processing logic of the service.

S804b: After receiving the scheduling request, the fourth network element determines at least one scheduled third network element based on the scheduling request, and sends a scheduling response to the first network element.

The scheduling response includes at least one of the following information of the at least one scheduled third network element: a capability, an identifier, address information, and status information of the at least one third network element.

For example, in the session establishment scenario, the scheduled third network element determined by the fourth network element includes the PCF and the SMF. The scheduling response includes capabilities, identifiers, address information, and status information of the PCF and the SMF that can provide services for the first network element.

For other services, different network elements may be involved.

S805a: The first network element sends a session policy request to the PCF.

The session policy request is used to request a session policy of the session from the PCF. The session policy request includes at least one of the following information: the DNN and the network slice information. For example, the network slice information may be single network slice selection assistance information (single network slice selection assistance information, S-NSSAI).

The first network element may alternatively obtain or store the session policy of the session in advance. Therefore, this step is optional, and is represented by a dashed line in the figure.

S805b: After receiving the session policy request, the PCF sends a session policy response to the first network element. After receiving the session policy request, the PCF generates the session policy based on the DNN and/or the network slice information carried in the session policy request, and sends the session policy response to the first network element. The session policy response includes the session policy (SM policy).

Corresponding to the foregoing case in which the session policy request is optional, this step may also be optional, and is represented by a dashed line in the figure.

S806: The first network element updates the session policy.

The update herein may be understood as that the first network element further modifies, based on the session-related subscription data of the terminal, the session policy obtained from the PCF. For example, if the session-related subscription data of the terminal allows a session bandwidth of the terminal to be 10 Mbps, and the session policy allows the session bandwidth of the terminal to be 8 Mbps, the first network element may update the session policy based on a preset standard by using the session-related subscription data of the terminal or the session policy obtained from the PCF as a standard. Alternatively, the first network element locally configures some policies, and may update the session policy by using a local policy of the first network element as a highest priority.

Corresponding to the foregoing case in which the session policy request and the session policy response are optional, this step may also be optional, and is represented by a dashed line in the figure.

S807: The first network element sends a session establishment request to the SMF.

The first network element invokes a session establishment service of the SMF, and sends the session establishment request to the SMF. The session establishment request includes at least one of the following information: session policy information, the session-related subscription data of the terminal, a session-related parameter (the DNN and the network slice information), information about a RAN side accessed by the terminal (address information, a port number, and the like of a base station), and the like.

S808: After receiving the session establishment request, the SMF performs user plane configuration on the UPF.

In this embodiment, the SMF and the UPF may still maintain an existing coupling mode, that is, the SMF manages a specific UPF. The SMF generates session configuration information based on the session policy information or the session-related subscription data of the terminal, and performs user plane configuration on the UPF. After completing the user plane configuration on the UPF, the SMF generates a corresponding session context.

S809: The SMF sends a session establishment response to the first network element.

The SMF feeds back the generated session context to the first network element. In other words, the session establishment response includes the session context.

In addition, optionally, the SMF may further send user plane configuration information to the first network element. When the first network element needs to re-invoke a new SMF to modify the session, the first network element may further send the user plane configuration information to the selected new SMF. In this case, the SMF and the re-invoked SMF may be different SMFs.

In addition, the SMF may alternatively store the generated user plane configuration information in the second network element, and then return, to the first network element, an operation complete indication or identification information of stored data (for example, PDU session identification information or an identifier of the user plane configuration information). Then, when selecting a new SMF, the first network element may send identification information of the user plane configuration information to the new SMF, and the new SMF obtains the user plane configuration information from the second network element, and performs corresponding session parameter modification on the user plane configuration information. Therefore, the SMF does not need to independently maintain a user-related context, and the context is uniformly stored by the second network element. Even if the SMF is faulty, the user-related context is not lost.

S810: The first network element updates the session context, and stores an updated session context in the second network element.

S811: The first network element sends the user plane configuration information to the RAN.

The user plane configuration information includes at least one of the following information: address information of the UPF and QoS configuration information.

S812: The first network element sends a session establishment complete message to the terminal.

The session establishment complete message includes a session-related parameter, for example, a QoS execution rule of an uplink data packet.

In the existing session establishment scenario, the terminal sends the session establishment request to the SMF. After the SMF receives the session establishment request of the terminal, the SMF obtains the session-related subscription data of the terminal from the UDM/UDR, and the SMF creates the subsequent session. However, in this embodiment, interaction between the SMF, the PCF, and the UPF is reduced, and most execution logic is normalized to be processed by the first network element, thereby improving flexibility of network deployment and management.

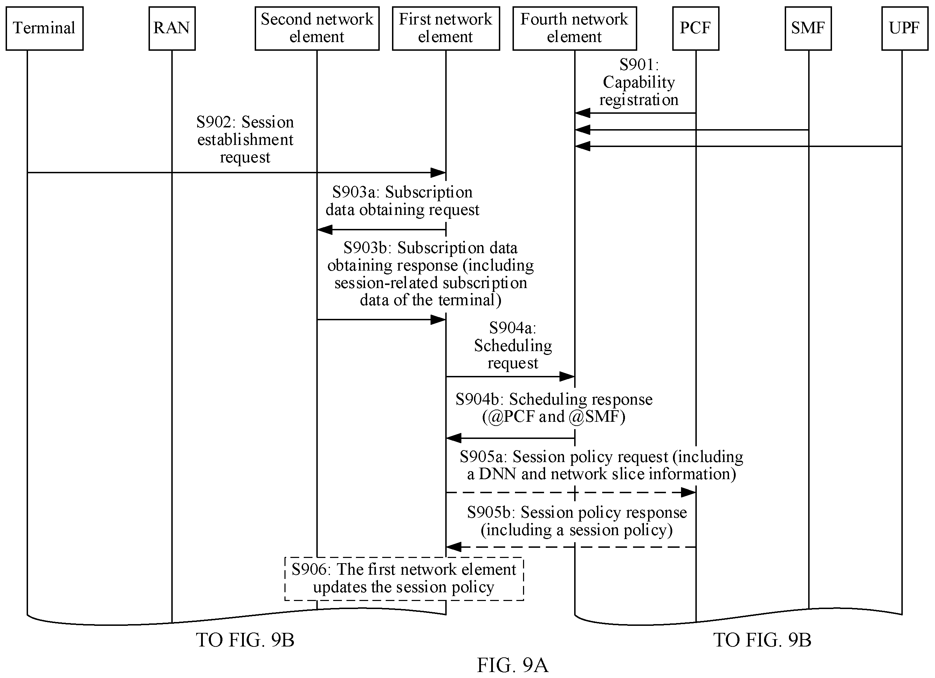

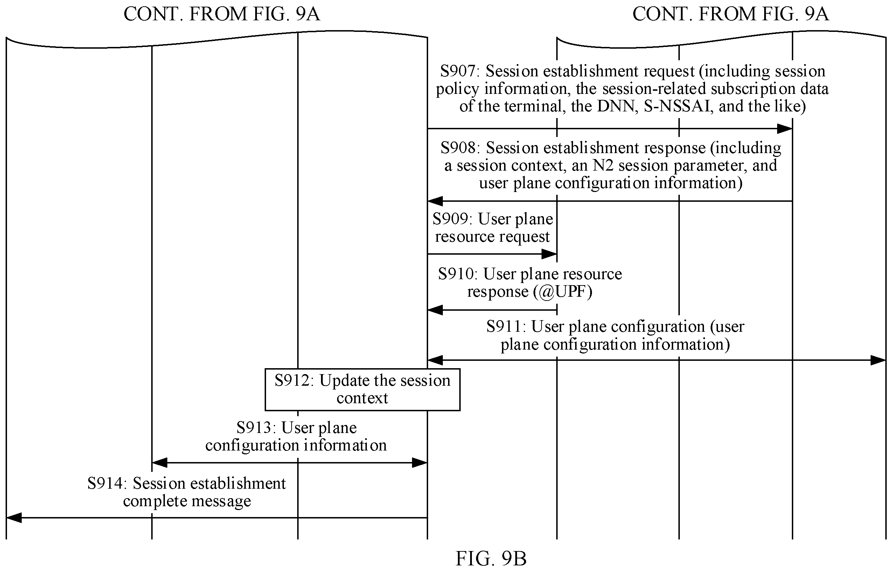

FIG. 9A and FIG. 9B are a schematic flowchart of another communication method in a session establishment scenario according to an embodiment of this application. Third network elements involved in the session establishment scenario include a PCF, an SMF, and a UPF. In this embodiment, the PCF, the SMF, and the UPF are decoupled from each other. For example, the method may include the following steps.

S901: The PCF, the SMF, and the UPF separately perform capability registration with a fourth network element.

For specific implementation of this step, refer to step S801 in the embodiment shown in FIG. 8A.

S902: A terminal sends a session establishment request to a first network element.

For specific implementation of this step, refer to step S802 in the embodiment shown in FIG. 8A.

S903a: After receiving the session establishment request, the first network element sends a subscription data obtaining request to a second network element.

For specific implementation of this step, refer to step S803a in the embodiment shown in FIG. 8A.

S903b: After receiving the subscription data obtaining request, the second network element sends a subscription data obtaining response to the first network element. The subscription data obtaining response includes session-related subscription data of the terminal.

For specific implementation of this step, refer to step S803b in the embodiment shown in FIG. 8A.

S904a: The first network element sends a scheduling request to the fourth network element.

For specific implementation of this step, refer to step S804a in the embodiment shown in FIG. 8A.

S904b: After receiving the scheduling request, the fourth network element determines at least one scheduled third network element based on the scheduling request, and sends a scheduling response to the first network element. The scheduling response includes at least one of the following information of the at least one scheduled third network element: a capability, an identifier, address information, and status information of the at least one third network element.

For specific implementation of this step, refer to step S804b in the embodiment shown in FIG. 8A.

S905a: The first network element sends a session policy request to the PCF. The session policy request includes at least one of the following information: a data network name DNN and network slice information.

For specific implementation of this step, refer to step S805a in the embodiment shown in FIG. 8B.

S905b: After receiving the session policy request, the PCF sends a session policy response to the first network element. The session policy response includes a session policy, and the session policy is generated based on the DNN and/or the network slice information.

For specific implementation of this step, refer to step S805b in the embodiment shown in FIG. 8B.

S906: The first network element updates the session policy.

For specific implementation of this step, refer to step S806 in the embodiment shown in FIG. 8B.

S907: The first network element sends a session establishment request to the SMF.

For specific implementation of this step, refer to step S807 in the embodiment shown in FIG. 8B.

S908: After receiving the session establishment request, the SMF sends a session establishment response to the first network element.

In this embodiment, the SMF and the UPF are independent of each other. The SMF completes session configuration according to the session policy based on the session-related subscription data of the terminal, RAN side information, and the like, and sends a session management context, N2 information, and user plane configuration information to the first network element. In other words, the session establishment response includes the session management context, the N2 information, and the user plane configuration information. Session configuration information may include at least one of the following information: user plane path information (RAN address information, port information, the DNN, the slice information, and the like), a QoS execution rule of a data packet, a charging rule, and a monitoring rule.

Alternatively, the SMF may store the session management context, the N2 information, and the user plane configuration information in the second network element, and return, to the first network element, only an operation complete indication or identification information of stored data.

S909: The first network element sends a user plane resource request to the fourth network element.

The user plane resource request is used by the first network element to request a user plane resource from the fourth network element based on the user configuration information. The user plane resource request may include at least one of the following information: the RAN side information, the DNN, the network slice information, and QoS information (for example, a session bandwidth, a rate guaranteed bandwidth, and a scheduling priority).

S910: After receiving the user plane resource request, the fourth network element sends a user plane resource response to the first network element.

The fourth network element feeds back, to the first network element based on the user plane resource request of the first network element, information about a UPF that can execute a session, for example, address information of the UPF.

S911: The first network element performs user plane configuration on the UPF.

Based on the received user plane resource response, the first network element performs user plane configuration on the UPF scheduled by the fourth network element, and carries the user plane configuration information.

If a user plane also provides a service-based function, the first network element may send a configured user plane context (similar to an N4 session in 5G) to the UPF, and the UPF processes a data packet of the terminal based on the configuration information.

S912: The first network element updates a session context, and stores an updated session context in the second network element.

For specific implementation of this step, refer to step S810 in the embodiment shown in FIG. 8B.

S913: The first network element sends the user plane configuration information to the RAN.

For specific implementation of this step, refer to step S811 in the embodiment shown in FIG. 8B.

S914: The first network element sends a session establishment complete message to the terminal.

For specific implementation of this step, refer to step S812 in the embodiment shown in FIG. 8B.

In an existing session establishment scenario, a terminal sends a session establishment request to an SMF. After the SMF receives the session establishment request of the terminal, the SMF obtains session-related subscription data of the terminal from a UDM/UDR, and the SMF creates a subsequent session. However, in this embodiment, the SMF no longer directly interacts with the PCF or the UPF, and all execution logic is normalized to be processed by the first network element, thereby improving flexibility of network deployment and management.

The foregoing embodiment shows how the first network element invokes a network service or data in the session establishment scenario. The following shows an example of how a first network element invokes a network service or data in a terminal access scenario.

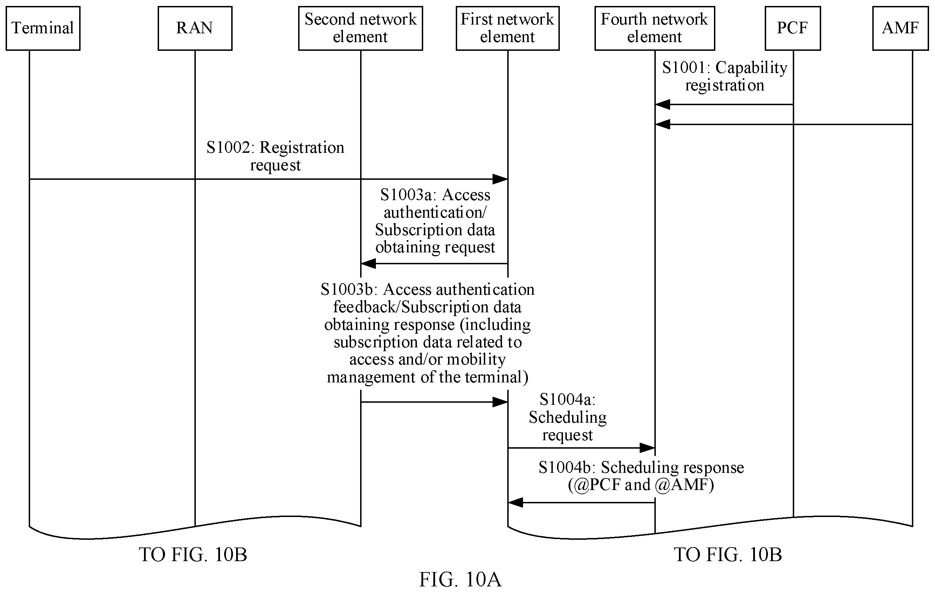

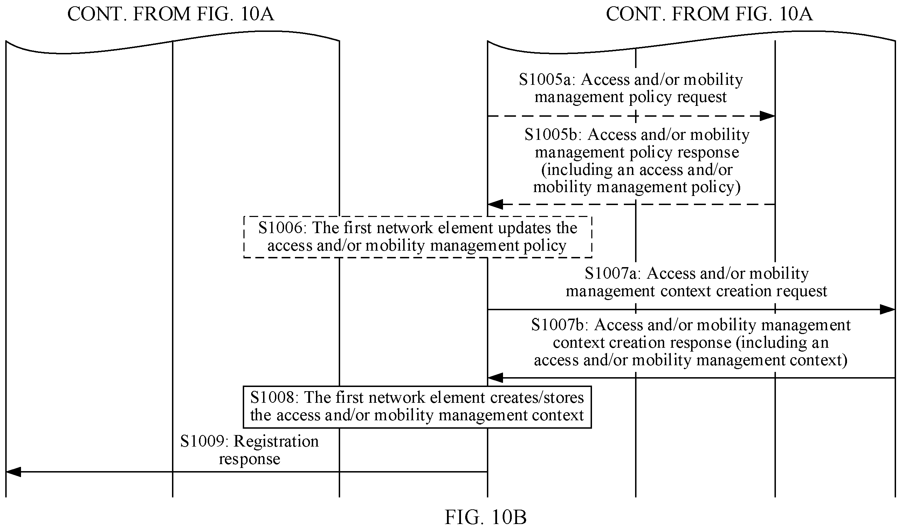

FIG. 10A and FIG. 10B are a schematic flowchart of a communication method in a terminal registration scenario according to an embodiment of this application. Third network elements involved in the terminal registration scenario include a PCF and an AMF. For example, the method may include the following steps.

S1001: The PCF and the AMF separately perform capability registration with a fourth network element.

When the PCF and the AMF perform capability registration, at least one of the following information is carried: a capability, an identifier, address information, status information, and home network information of the PCF/AMF.

S1002: A terminal sends a registration request to a first network element.

The registration request is used to request to register with a network. The registration request may include an identifier of the terminal.

S1003a: After receiving the registration request, the first network element sends an access authentication/subscription data obtaining request to a second network element.

The access authentication/subscription data obtaining request is used to request to obtain subscription data related to access and/or mobility management of the terminal.

S1003b: After receiving the access authentication/subscription data obtaining request, the second network element sends an access authentication/subscription data obtaining response to the first network element.

The access authentication/subscription data obtaining response includes the subscription data related to the access and/or mobility management of the user.

However, in an existing terminal registration scenario, after receiving a registration request of a terminal, a RAN forwards the registration request to an AMF/a PCF. The AMF/PCF obtains subscription data related to access and/or mobility management from a UDM/UDR, and then the AMF/PCF interacts with another network element based on the subscription data related to access and/or mobility management to perform a subsequent registration procedure. In this case, privacy data of a user is frequently transmitted in a network, and security is reduced.

In this embodiment, the first network element uniformly obtains session-related subscription data from the second network element and sends the session-related subscription data to the PCF, but the PCF cannot directly access the subscription data related to access and/or mobility management. This avoids frequent transmission of privacy data of the user in the network, and improves security of the data.

S1004a: The first network element sends a scheduling request to the fourth network element.

The scheduling request is used to obtain, from the fourth network element based on a service requested by the terminal, information about all third network elements related to the service.

For example, the scheduling request may include processing logic of a service of the first network element.

Alternatively, the first network element may send the scheduling request to the fourth network element for a plurality of times based on the processing logic of the service.

S1004b: After receiving the scheduling request, the fourth network element determines at least one scheduled third network element based on the scheduling request, and sends a scheduling response to the first network element.

The scheduling response includes at least one of the following information of the at least one scheduled third network element: a capability, an identifier, address information, and status information of the at least one third network element.

For example, in the session establishment scenario, the scheduled third network element determined by the fourth network element includes the PCF and the AMF. The scheduling response includes capabilities, identifiers, address information, and status information of the PCF and the AMF that can provide services for the first network element.

S1005a: The first network element sends an access and/or mobility management policy request to the PCF.

The access and/or mobility management policy request is used to request to obtain an access and/or mobility management policy from the PCF.

The first network element may alternatively obtain or store the access and/or mobility management policy in advance. Therefore, this step is optional, and is represented by a dashed line in the figure.

S1005b: After receiving the access and/or mobility management policy request, the PCF sends an access and/or mobility management policy response to the first network element.

After receiving the access and/or mobility management policy request, the PCF generates the access and/or mobility management policy, and sends the access and/or mobility management policy to the first network element.

The access and/or mobility management policy response includes the access and/or mobility management policy.

Corresponding to the foregoing case in which the access and/or mobility management policy request is optional, this step may also be optional, and is represented by a dashed line in the figure.

S1006: The first network element updates the access and/or mobility management policy.

The update herein may be understood as that the first network element further modifies, based on the subscription data related to access and/or mobility management, the access and/or mobility management policy obtained from the PCF.

Corresponding to the foregoing case in which the access and/or mobility management policy request and the access and/or mobility management policy response are optional, this step may also be optional, and is represented by a dashed line in the figure.

S1007a: The first network element sends an access and/or mobility management context creation request to the AMF. The first network element invokes an access and/or mobility management service of the AMF, and sends the access and/or mobility management context creation request to the AMF. The access and/or mobility management context creation request is used to request the AMF to create an access and/or mobility management context.

For example, as described above, a future access and mobility management function network element may be divided into two network elements: an access management function network element and a mobility management function network element. In this case, the first network element may separately send an access management context creation request to the access management function network element, and send a mobility management context creation request to the mobility management function network element.

S1107b: The AMF sends an access and/or mobility management context creation response to the first network element. After receiving the access and/or mobility management context creation request, the AMF creates the access and/or mobility management context. The access and/or mobility management context creation response includes the access and/or mobility management context.

S1008: The first network element creates/stores the access and/or mobility management context in the second network element.

S1009: The first network element sends a registration response to the terminal.

The registration response indicates that the terminal has been registered with the network.

In an existing registration scenario, a terminal sends a registration request to an AMF. After receiving the registration request of the terminal, the AMF obtains subscription data related to access and/or mobility management from a UDM/UDR, and then performs a subsequent registration procedure. However, in this embodiment, interaction between the AMF and the PCF is reduced, and most execution logic is normalized to be processed by the first network element, thereby improving flexibility of network deployment and management.

The foregoing embodiment shows how the first network element invokes the network service or the data in the session establishment scenario and the registration scenario. The following shows an example of how a first network element invokes a network service or data in a service request scenario.

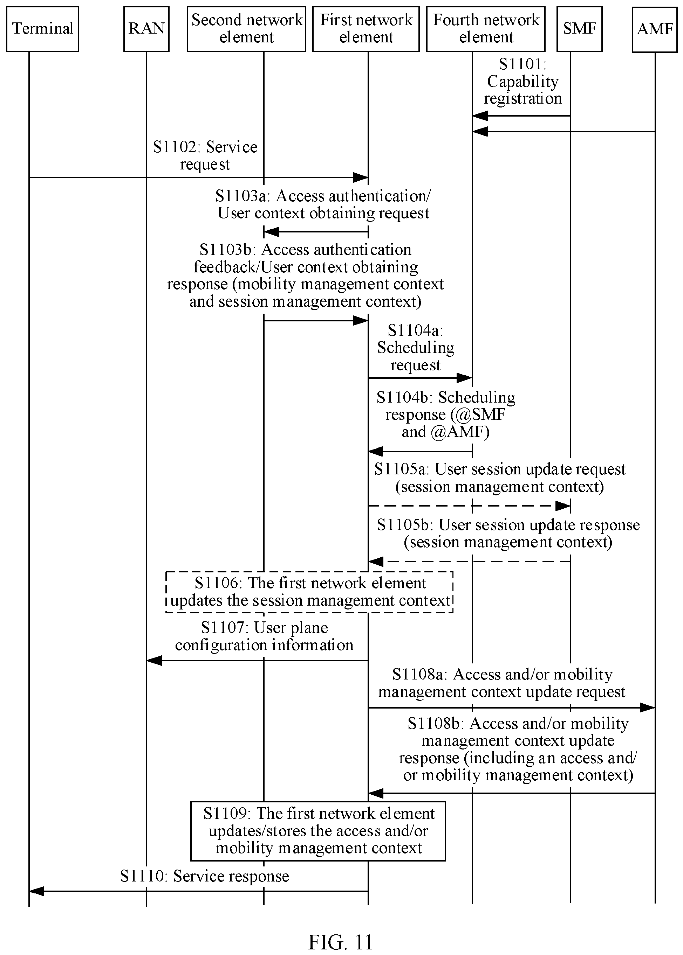

FIG. 11 is a schematic flowchart of a communication method in a service request scenario according to an embodiment of this application. Third network elements involved in the service request scenario include an SMF and an AMF. For example, the method may include the following steps.

S1101: The SMF and the AMF separately perform capability registration with a fourth network element.

When the SMF and the AMF perform capability registration, at least one of the following information is carried: a capability, an identifier, address information, status information, and home network information of the SMF/AMF.

S1102: A terminal sends a service request (service request) to a first network element.

The service request is used to request to connect to a network to obtain a service of the network. A corresponding operation of a network element in the network is to change a state of the terminal from an idle state to a connected state, and then a session suspended by the terminal is activated. Therefore, the procedure in this embodiment involves requesting the AMF to change an access and/or mobility management context of the terminal (state update of the terminal), and updating a PDU session of the terminal by the SMF.

The service request includes at least one of the following information: an identifier of the terminal, a session identifier, a DNN, and slice information.

S1103a: After receiving the service request, the first network element sends an access authentication/user context obtaining request to a second network element.

The access authentication/user context obtaining request is used to request to obtain a user context.

S 1103b: After receiving the access authentication/user context obtaining request, the second network element sends an access authentication/user context obtaining response to the first network element.

The access authentication/user context obtaining response includes a mobility management context and a session management context.

However, in an existing service scenario, after receiving a service request of a terminal, an AMF obtains a user context from a UDM/UDR. In other words, the AMF may directly access the user context, and then the AMF interacts with another network element based on the user context to execute a subsequent service. In this case, privacy data of a user is frequently transmitted in a network, and security is reduced.

In this embodiment, the first network element uniformly obtains the user context from the second network element and sends the user context to the AMF, but the AMF cannot directly access the user context. This avoids frequent transmission of privacy data of a user in the network, and improves security of the data.

S1104a: The first network element sends a scheduling request to the fourth network element.

The scheduling request is used to obtain, from the fourth network element based on a service requested by the terminal, information about all third network elements related to the service.

For example, the scheduling request may include processing logic of a service of the first network element.

Alternatively, the first network element may send the scheduling request to the fourth network element for a plurality of times based on the processing logic of the service.

S1104b: After receiving the scheduling request, the fourth network element determines at least one scheduled third network element based on the scheduling request, and sends a scheduling response to the first network element.

The scheduling response includes at least one of the following information of the at least one scheduled third network element: a capability, an identifier, address information, and status information of the at least one third network element.

For example, in the service scenario, the scheduled third network element determined by the fourth network element includes the AMF and the SMF. The scheduling response includes capabilities, identifiers, address information, and status information of the AMF and the SMF that can provide services for the first network element.

S1105a: The first network element sends a user session update request to the SMF.

The user session update request is used to request the SMF to update a protocol data unit (protocol data unit, PDU) session of the terminal. The user session update request includes a session management context obtained by the first network element from the second network element.

S1105b: After receiving the user session update request, the SMF sends a user session update response to the first network element.

After receiving the user session update request, the SMF updates the PDU session of the terminal, and updates the session management context after completing user plane configuration of a UPF. The user session update response indicates that the PDU session of the terminal has been updated. In addition, the user session update response includes an updated session management context. The updated session management context includes user plane configuration information.

S1106: The first network element updates the session management context.

After receiving the updated session management context, the first network element stores the updated session management context in the second network element.

S1107: The first network element sends the user plane configuration information to a RAN.

The first network element sends, to the RAN, the user plane configuration information included in the session management context.

S1108a: The first network element sends an access and/or mobility management context update request to the AMF.

The first network element invokes an access and/or mobility management service of the AMF, and sends the access and/or mobility management context update request to the AMF. The access and/or mobility management context update request is used to request the AMF to update the access and/or mobility management context.

For example, as described above, a future access and mobility management function network element may be divided into two network elements: an access management function network element and a mobility management function network element. In this case, the first network element may separately send an access management context update request to the access management function network element, and send a mobility management context update request to the mobility management function network element.

S1108b: The AMF sends an access and/or mobility management context update response to the first network element. After receiving the access and/or mobility management context update request, the AMF updates the access and/or mobility management context. The access and/or mobility management context update response includes an updated access and/or mobility management context.

S1109: The first network element updates/stores the access and/or mobility management context.

S1110: The first network element sends a service response to the terminal.

The service response includes a service result.

In the existing service scenario, the terminal sends the service request to the AMF. After receiving the service request of the terminal, the AMF obtains the user context from the UDM/UDR, and then performs a subsequent service procedure. However, in this embodiment, interaction between the AMF and the SMF is reduced, and most execution logic is normalized to be processed by the first network element, thereby improving flexibility of network deployment and management.

It may be understood that, to implement functions in the foregoing embodiments, the network elements include corresponding hardware structures and/or corresponding software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

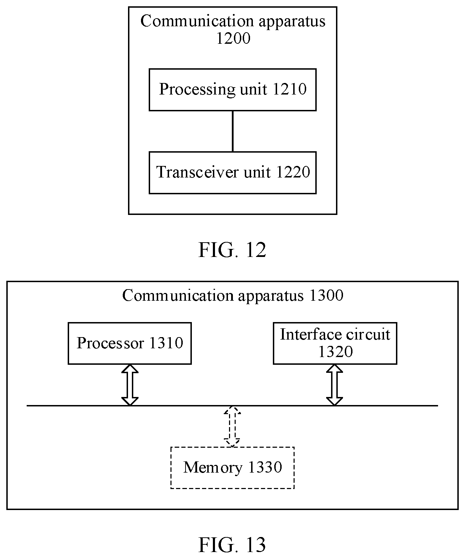

FIG. 12 and FIG. 13 are diagrams of structures of possible communication apparatuses according to embodiments of this application. These communication apparatuses may be configured to implement functions of the network elements in the foregoing method embodiments, and therefore may also implement beneficial effects of the foregoing method embodiments.

As shown in FIG. 12, a communication apparatus 1200 includes a processing unit 1210 and a transceiver unit 1220. The communication apparatus 1200 is configured to implement functions of the network elements in the method embodiments shown in FIG. 5 to FIG. 11.

When the communication apparatus 1200 is configured to implement functions of the first network element in the method embodiment shown in FIG. 5, the transceiver unit 1220 is configured to perform operations of the first network element in S501, S502, and S504 to S506 in the embodiment shown in FIG. 5. Alternatively, when the communication apparatus 1200 is configured to implement functions of the first network element in the method embodiment shown in FIG. 6, the transceiver unit 1220 is configured to perform operations of the first network element in S601 to S603 in the embodiment shown in FIG. 6.

When the communication apparatus 1200 is configured to implement functions of the second network element in the method embodiment shown in FIG. 5, the transceiver unit 1220 is configured to perform operations of the second network element in S501 and S504 to S506 in the embodiment shown in FIG. 5. Alternatively, when the communication apparatus 1200 is configured to implement functions of the second network element in the method embodiment shown in FIG. 6, the transceiver unit 1220 is configured to perform an operation of the second network element in S602 in the embodiment shown in FIG. 6.

When the communication apparatus 1200 is configured to implement functions of the third network element in the method embodiment shown in FIG. 5, the transceiver unit 1220 is configured to perform operations of the third network element in S502 and S504 in the embodiment shown in FIG. 5, and the processing unit 1210 is configured to perform S503 in the embodiment shown in FIG. 5. Alternatively, when the communication apparatus 1200 is configured to implement functions of the third network element in the method embodiment shown in FIG. 6, the transceiver unit 1220 is configured to perform an operation of the third network element in S602 in the embodiment shown in FIG. 6.

When the communication apparatus 1200 is configured to implement functions of the fourth network element in the method embodiment shown in FIG. 8A and FIG. 8B, the transceiver unit 1220 is configured to perform an operation of the fourth network element in S801 in the embodiment shown in FIG. 8A and FIG. 8B. Alternatively, when the communication apparatus 1200 is configured to implement functions of the fourth network element in the method embodiment shown in FIG. 9A and FIG. 9B, the transceiver unit 1220 is configured to perform an operation of the fourth network element in S901 in the embodiment shown in FIG. 9A and FIG. 9B. Alternatively, when the communication apparatus 1200 is configured to implement functions of the fourth network element in the method embodiment shown in FIG. 10A and FIG. 10B, the transceiver unit 1220 is configured to perform an operation of the fourth network element in S1001 in the embodiment shown in FIG. 10A and FIG. 10B. Alternatively, when the communication apparatus 1200 is configured to implement functions of the fourth network element in the method embodiment shown in FIG. 11, the transceiver unit 1220 is configured to perform an operation of the fourth network element in S1101 in the embodiment shown in FIG. 11.

For more detailed descriptions of the processing unit 1210 and the transceiver unit 1220, directly refer to the related descriptions in the method embodiments shown in FIG. 5 to FIG. 11. Details are not described herein again.

As shown in FIG. 13, a communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, store input data required by the processor 1310 to run the instructions, or store data generated after the processor 1310 runs the instructions.

When the communication apparatus 1300 is configured to implement the methods shown in FIG. 5 to FIG. 11, the processor 1310 is configured to implement functions of the processing unit 1210, and the interface circuit 1320 is configured to implement functions of the transceiver unit 1220.

When the communication apparatus is a chip used in the first network element, the chip of the first network element implements functions of the first network element in the foregoing method embodiments. The chip of the first network element receives information from another module (for example, a radio frequency module or an antenna) in the first network element, where the information is sent by the second network element, the third network element, or the fourth network element to the first network element; or the chip of the first network element sends information to another module (for example, a radio frequency module or an antenna) in the first network element, where the information is sent by the first network element to the second network element, the third network element, or the fourth network element.

When the communication apparatus is a chip used in a second network element, the chip of the second network element implements functions of the second network element in the foregoing method embodiments. The chip of the second network element receives information from another module (for example, a radio frequency module or an antenna) in the second network element, where the information is sent by the first network element or the third network element to the second network element; or the chip of the second network element sends information to another module (for example, a radio frequency module or an antenna) in the second network element, where the information is sent by the second network element to the first network element or the third network element.

When the communication apparatus is a chip used in a third network element, the chip of the third network element implements functions of the third network element in the foregoing method embodiments. The chip of the third network element receives information from another module (for example, a radio frequency module or an antenna) in the third network element, where the information is sent by the first network element, the second network element, or the fourth network element to the third network element; or the chip of the third network element sends information to another module (for example, a radio frequency module or an antenna) in the third network element, where the information is sent by the third network element to the first network element, the second network element, or the fourth network element.

When the communication apparatus is a chip used in a fourth network element, the chip of the fourth network element implements functions of the fourth network element in the foregoing method embodiment. The chip of the fourth network element receives information from another module (for example, a radio frequency module or an antenna) in the fourth network element, where the information is sent by the first network element or the third network element to the fourth network element; or the chip of the fourth network element sends information to another module (for example, a radio frequency module or an antenna) in the fourth network element, where the information is sent by the fourth network element to the first network element or the third network element.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. It is clear that the storage medium may be a component of the processor. The processor and the storage medium may be disposed in an ASIC. In addition, the ASIC may be located in a network device or a terminal device. It is clear that the processor and the storage medium may alternatively exist as discrete components in a network device or a terminal device.

All or a part of the foregoing embodiments may be implemented by software, hardware, firmware, or any combination thereof. When the software is used to implement embodiments, all or a part of the foregoing embodiments may be implemented in a form of a computer program product. The computer program product includes one or more computer programs or instructions. When the computer programs or instructions are loaded and executed on a computer, all or a part of the procedures or functions in embodiments of this application are performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
obtaining, by a first network element, service input data or an obtaining credential of the service input data from a second network element based on a received service trigger event;
sending, by the first network element, a service request to at least one third network element, wherein the service request comprises the service input data or the obtaining credential of the service input data; and
receiving, by the first network element, a service feedback from the at least one third network element, wherein the service feedback comprises a service execution result.

2. The method according to claim 1, wherein the first network element is configured to process different service requests in a network, the second network element is configured to provide a data storage service for the first network element and/or the at least one third network element, and the at least one third network element is a network element providing a network function, wherein
the at least one third network element comprises a session management function SMF network element, an access and mobility management function AMF network element, and a policy control function PCF network element.

3. The method according to claim 1 or 2, wherein the sending, by the first network element, a service request to at least one third network element comprises:
sending, by the first network element, the service request to the at least one third network element based on execution logic of a service, wherein
the execution logic of the service comprises at least one of the following information: at least one third network element that needs to be invoked for each service, a scheduling sequence of the at least one third network element, a format of service input data corresponding to each third network element, and content of the service input data corresponding to each third network element.

4. The method according to any one of claims 1 to 3, wherein the method further comprises:
sending, by the first network element, a scheduling request to a fourth network element, wherein the fourth network element is configured to provide a network function discovery and selection service for the first network element; and
receiving, by the first network element, a scheduling response from the fourth network element, wherein the scheduling response comprises at least one of the following information of the at least one third network element: a capability, an identifier, address information, status information, and home network information of the at least one third network element.

5. The method according to any one of claims 1 to 4, wherein the service feedback further comprises an update result of the service input data; and
the method further comprises:
sending, by the first network element, a data synchronization request to the second network element, wherein the data synchronization request comprises the update result of the service input data; and
receiving, by the first network element, a data synchronization response from the second network element.

6. The method according to any one of claims 1 to 5, wherein the service trigger event comprises a service request from a fifth network element; and
the method further comprises:
sending, by the first network element, the service feedback to the fifth network element.

7. The method according to claim 6, wherein the first network element and the fifth network element belong to different networks, and the different networks are user-level networks or operator networks, different user-level networks, or different network slices.

8. The method according to any one of claims 1 to 7, wherein the service input data is processed user data.

9. The method according to any one of claims 1 to 7, wherein the service input data is unprocessed user data, and the method further comprises:
processing, by the first network element, the service input data to obtain processed user data.

10. The method according to claim 8 or 9, wherein the processed user data comprises at least one of the following: encrypted user data, user data from which user identification information is removed, a temporary user identifier, and an encrypted user identifier.

11. The method according to any one of claims 6 to 10, wherein the service trigger event comprises at least one of the following: a communication service request initiated by a terminal, a communication service request initiated by the fifth network element, a periodic communication service, and an event-triggered communication service;
the sending, by the first network element, a service request to at least one third network element comprises: separately sending, by the first network element, the service request to at least one third network element associated with the service trigger event, wherein the service request comprises the service input data obtained by the first network element from the second network element and a service execution result obtained from another third network element in the at least one third network element; and
the receiving, by the first network element, a service feedback from the at least one third network element comprises: separately receiving, by the first network element, the service feedback from the at least one third network element.

12. The method according to any one of claims 1 to 11, wherein the service trigger event is a session establishment request, and the service input data comprises session subscription data;
the sending, by the first network element, a service request to at least one third network element comprises:
sending, by the first network element, a session policy request to the PCF, wherein the session policy request comprises at least one of the following information: a data network name DNN and network slice information; and
the receiving, by the first network element, a service feedback from the at least one third network element comprises:
receiving, by the first network, a session policy response from the PCF, wherein the session policy response comprises a session policy, and the session policy is generated based on the DNN and/or the network slice information.

13. The method according to claim 12, wherein the sending, by the first network element, a service request to at least one third network element further comprises:
sending, by the first network element, a session establishment request to the SMF, wherein the session establishment request comprises session policy information or session subscription information; and
the receiving, by the first network element, a service feedback from the at least one third network element further comprises:
receiving, by the first network element, a session establishment response from the SMF, wherein the session establishment response comprises a session context.

14. A communication method, wherein the method comprises:
receiving, by a second network element, an obtaining request from a first network element, wherein the obtaining request is used to request to obtain service input data or an obtaining credential of the service input data, and the obtaining credential of the service input data is a credential for obtaining the service input data; and
sending, by the second network element, an obtaining response to the first network element, wherein the obtaining response comprises the service input data or the obtaining credential of the service input data.

15. The method according to claim 14, wherein the first network element is configured to process different service requests in a network, the second network element is configured to provide a data storage service for the first network element and/or at least one third network element, and the at least one third network element is a network element providing a network function, wherein
the at least one third network element comprises a session management function SMF network element, an access and mobility management function AMF network element, and a policy control function PCF network element.

16. The method according to claim 14 or 15, wherein the service input data is processed user data; and
the method further comprises:
processing, by the second network element, the service input data to obtain processed user data.

17. The method according to claim 16, wherein the processed user data comprises at least one of the following: encrypted user data, user data from which user identification information is removed, a temporary user identifier, and an encrypted user identifier.

18. A communication method, wherein the method comprises:
receiving, by a third network element, a service request, wherein the service request comprises service input data or an obtaining credential of the service input data; and
executing, by the third network element, a requested service based on the service request.

19. The method according to claim 18, wherein the method further comprises:
sending, by the third network element, a service feedback to a first network element, wherein the service feedback comprises a service execution result.

20. The method according to claim 19, wherein the first network element is configured to process different service requests in a network, and the third network element is a network element providing a network function, wherein
the third network element comprises any one of the following: a session management function SMF network element, an access and mobility management function AMF network element, and a policy control function PCF network element.

21. The method according to claim 19 or 20, wherein the receiving, by a third network element, a service request comprises:
receiving, by the third network element, the service request from the first network element.

22. The method according to any one of claims 19 to 21, wherein the method further comprises:
sending, by the third network element, a registration request to a fourth network element, wherein the registration request comprises at least one of the following information: a capability, an identifier, address information, status information, and home network information of the third network element, and the fourth network element is configured to provide a network function discovery and selection service for the first network element; and
receiving, by the third network element, a registration response from the fourth network element.

23. The method according to claim 22, wherein the receiving, by a third network element, a service request comprises:
receiving, by the third network element, the service request from the fourth network element.

24. The method according to any one of claims 19 to 23, wherein the service request comprises the obtaining credential of the service input data, and the receiving, by a third network element, a service request comprises:
sending, by the third network element, an obtaining request to a second network element based on the obtaining credential, wherein the second network element is configured to provide a data storage service for the first network element and/or the third network element; and
receiving, by the third network element, an obtaining response from the second network element, wherein the obtaining response comprises the service input data.

25. The method according to claim 24, wherein the service input data is processed user data.

26. The method according to claim 25, wherein the processed user data comprises at least one of the following: encrypted user data, user data from which user identification information is removed, a temporary user identifier, and an encrypted user identifier.

27. The method according to any one of claims 18 to 26, wherein the service request comprises the service input data obtained by the first network element from the second network element and a service execution result obtained from another third network element in the at least one third network element.

28. The method according to any one of claims 20 to 27, wherein the third network element is the PCF network element, and the service input data comprises session subscription data;
the receiving, by a third network element, a service request comprises:
receiving, by the third network element, a session policy request, wherein the session policy request comprises at least one of the following information: a data network name DNN and network slice information; and
the sending, by the third network element, a service feedback to a first network element comprises:
sending, by the third network element, a session policy response to the first network element, wherein the session policy response comprises a session policy, and the session policy is generated based on the DNN and/or the network slice information.

29. The method according to any one of claims 20 to 28, wherein the third network element is the SMF network element;
the receiving, by a third network element, a service request comprises:
receiving, by the third network element, a session establishment request, wherein the session establishment request comprises session policy information or session subscription information; and
the sending, by the third network element, a service feedback to a first network element comprises:
sending, by the third network element, a session establishment response to the first network element, wherein the session establishment response comprises a session context.

30. A communication method, wherein the method comprises:
receiving, by a fourth network element, a registration request from at least one third network element, wherein the registration request comprises at least one of the following information: a capability, an identifier, address information, status information, and home network information of the third network element;
sending, by the fourth network element, a registration response to the at least one third network element;
receiving, by the fourth network element, a scheduling request from a first network element;
determining, by the fourth network element, at least one scheduled third network element based on the scheduling request; and
sending, by the fourth network element, a scheduling response to the first network element, wherein the scheduling response comprises at least one of the following information of the at least one scheduled third network element: a capability, an identifier, address information, and status information of the at least one third network element; or sending, by the fourth network element, the scheduling request to the at least one scheduled third network element.

31. The method according to claim 30, wherein the first network element is configured to process different service requests in a network, the at least one third network element is a network element providing a network function, and the fourth network element is configured to provide a network function discovery and selection service for the first network element, wherein
the at least one third network element comprises a session management function SMF network element, an access and mobility management function AMF network element, and a policy control function PCF network element.

32. A communication apparatus, comprising a function or unit configured to perform the method according to any one of claims 1 to 31.

33. A communication apparatus, comprising a processor and an interface circuit, wherein the interface circuit is configured to: receive a signal from an apparatus other than the communication apparatus and transmit the signal to the processor, or send a signal from the processor to an apparatus other than the communication apparatus, and the processor is configured to implement the method according to any one of claims 1 to 31 through a logic circuit or by executing code instructions.

34. A communication system, comprising the communication apparatus according to claim 32 or 33.

35. A chip, wherein the chip is configured to perform the method according to any one of claims 1 to 13, configured to perform the method according to any one of claims 14 to 17, configured to perform the method according to any one of claims 18 to 29, or configured to perform the method according to claim 30 or 31.

36. A chip module, comprising a transceiver component and a chip, wherein the chip is configured to perform the method according to any one of claims 1 to 13, configured to perform the method according to any one of claims 14 to 17, configured to perform the method according to any one of claims 18 to 29, or configured to perform the method according to claim 30 or 31.

37. A computer-readable storage medium, wherein the storage medium stores a computer program or instructions, and when the computer program or the instructions are executed by a communication apparatus, the method according to any one of claims 1 to 31 is implemented.

38. A computer program product, wherein when the computer program product runs on a computer, the method according to any one of claims 1 to 31 is performed.
